# EUROPEAN PATENT SPECIFICATION

(11) **EP 3 379 892 B1**
(45) Date of publication and mention of the grant of the patent: **17.03.2021**
(21) Application number: 16866669.1
(22) Date of filing: 17.11.2016
(51) Int. Cl.: H04W 76/28, H04W 76/50

(54) **METHODS FOR SUPPORTING EXTENDED IDLE MODE DISCONTINUOUS RECEPTION ACTIVATION IN WIRELESS COMMUNICATION SYSTEM AND APPARATUS THEREFOR**
VERFAHREN ZUR UNTERSTÜTZUNG DES DISKONTINUIERLICHEN EMPFANGS IM LEERLAUFMODUS IN EINEM DRAHTLOSKOMMUNIKATIONSSYSTEM UND VORRICHTUNG DAFÜR
PROCÉDÉS POUR PRENDRE EN CHARGE UNE ACTIVATION DE RÉCEPTION DISCONTINUE EN MODE REPOS ÉTENDUE DANS UN SYSTÈME DE COMMUNICATION SANS FIL ET APPAREIL ASSOCIÉ

(30) Priority: 17.11.2015 US 201562256644 P
(43) Date of publication of application: 26.09.2018
(73) Proprietor: LG Electronics Inc., Yeongdeungpo-gu Seoul 07336 (KR)
(72) Inventor: RYU, Jinsook, Seoul 06772 (KR); PARK, Sangmin, Seoul 06772 (KR); KIM, Jaehyun, Seoul 06772 (KR); KIM, Taehun, Seoul 06772 (KR)
(74) Representative: Frenkel, Matthias Alexander
(86) International application number: PCT/KR2016/013278
(87) International publication number: WO 2017/086717

(56) References cited:
- KR-A- 20110 003 399
- KR-A- 20140 106 665
- US-A1- 2015 056 959
- US-A1- 2015 237 577
- SA WG2: "[DRAFT] LS on Clarification on using eDRX in case of emergency bearer services", 3GPP DRAFT; S2-154091_LS_EDRX_EMERGENCY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Anaheim, California, USA; 20151116 - 20151120 16 November 2015 (2015-11-16), XP051014164, Retrieved from the Internet: URL:http://www.3gpp.org/ftp/Meetings_3GPP_ SYNC/SA2/Docs/ [retrieved on 2015-11-16]
- "3rd Generation Partnership Project; Technical Specification Group Core Network and Terminals; Mobile radio interface Layer 3 specification; Core network protocols; Stage 3 (Release 13)", 3GPP DRAFT; DRAFT_24008-D30-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 September 2015 (2015-09-24), pages 140-140, XP002791783, Retrieved from the Internet: URL:http://www.3gpp.org/ftp/tsg_ct/WG1_mm- cc-sm_ex-CN1/TSGC1_94_Belgrade/draftspecs_ after69/ [retrieved on 2015-09-24]
- "3rd Generation Partnership Project; Technical Specification Group Core Network and Terminals; Non-Access-Stratum (NAS) protocol for Evolved Packet System (EPS); Stage 3 (Release 13)", 3GPP DRAFT; DRAFT_24301-D30-V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 22 September 2015 (2015-09-22), pages 68-68, XP002791784, Retrieved from the Internet: URL:http://www.3gpp.org/ftp/tsg_ct/WG1_mm- cc-sm_ex-CN1/TSGC1_94_Belgrade/draftspecs_ after69/ [retrieved on 2015-09-22]
- ERICSSON: "Power Saving Enhancements for UMTS", RP-151291, 3GPP TSG RAN meeting #69, 8 September 2015 (2015-09-08), XP051653160, Phoenix, USA

## Description

### [Technical Field]

The present invention relates to a wireless communication system and, more particularly, to methods for supporting the activation of an extended idle mode discontinuous reception (eDRX) mode and an apparatus supporting the same.

### [Background Art]

Mobile communication systems have been developed to provide voice services, while guaranteeing user activity. Service coverage of mobile communication systems, however, has extended even to data services, as well as voice services, and currently, an explosive increase in traffic has resulted in shortage of resource and user demand for a high speed services, requiring advanced mobile communication systems.

The requirements of the next-generation mobile communication system may include supporting huge data traffic, a remarkable increase in the transfer rate of each user, the accommodation of a significantly increased number of connection devices, very low end-to-end latency, and high energy efficiency. To this end, various techniques, such as small cell enhancement, dual connectivity, massive Multiple Input Multiple Output (MIMO), in-band full duplex, non-orthogonal multiple access (NOMA), supporting super-wide band, and device networking, have been researched.

Document (SA WG2:"[DRAFT] LS on Clarification on using eDRX in case of emergency bearer services", 3GPP DRAFT; S2-154091_LS_EDRX_EMERGENCY, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Anaheim, California, USA, XP051014164) discloses a clarification using eDRX in case of emergency bearer services.

Document ("3rd Generation Partnership Project; Technical Specification Group Core Network and Terminals; Mobile radio interface Layer 3 specification; Core network protocols; Stage 3 (Release 13)", 3GPP DRAFT; DRAFT_24008-D30-V2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANDCE, XP002791783) discloses that an MS shall not request the use of extended idle mode DRX cycle during a routing area updating procedure when the MS has a PDP context established for emergency bearer services.

Document ("3rd Generation Partnership Project; Technical Specification Group Core Network and Terminals; Non-Access-Stratum (NAS) protocol for Evolved Packet System (EPS); Stage 3 (Release 13)", 3GPP DRAFT; DRAFT_24301-D30-V1, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANDCE, XP002791784) discloses that a UE shall not request the use of extended idle mode DRX cycle during a tracking area updating procedure when the UE has a PDN connection established for emergency bearer services.

### [Disclosure]

### [Technical Problem]

An object of the present invention is to propose a method for supporting the activation of eDRX with respect to a UE for which an emergency bearer service has been activated.

The technical problems solved by the present invention are not limited to the above technical problems and those skilled in the art may understand other technical problems from the following description.

### [Technical Solution]

The solution is embodied in the method for supporting extended idle mode discontinuous reception of independent claims 1 and 7 and in the user equipment for supporting extended idle mode discontinuous reception of independent claim 9.

### [Advantageous Effects]

While an emergency bearer service is activated, a UE also negotiates an eDRX parameter with a network. Accordingly, eDRX can be immediately applied because a separate procedure for the negotiation of the eDRX parameter does not need to be performed when the emergency bearer service is deactivated.

While an emergency bearer service is activated, a UE also negotiates an eDRX parameter with a network. Accordingly, control signaling overhead for eDRX activation can be reduced because a separate procedure for the negotiation of the eDRX parameter does not need to be performed when the emergency bearer service is deactivated.

It will be appreciated by persons skilled in the art that that the effects that can be achieved through the present invention are not limited to what has been particularly described hereinabove and other advantages of the present invention will be more clearly understood from the following detailed description.

### [Description of Drawings]

FIG. 1 is a diagram schematically exemplifying an evolved packet system (EPS) to which the present invention can be applied.
FIG. 2 illustrates an example of evolved universal terrestrial radio access network structure to which the present invention can be applied.
FIG. 3 exemplifies a structure of E-UTRAN and EPC in a wireless communication system to which the present invention can be applied.
FIG. 4 illustrates a structure of a radio interface protocol between a UE and E-UTRAN in a wireless communication system to which the present invention can be applied.
FIG. 5 is a diagram schematically showing a structure of a physical channel in a wireless communication system to which the present invention may be applied.
FIG. 6 is a diagram for describing a contention based random access procedure in a wireless communication system to which the present invention may be applied.
FIG. 7 illustrates a bearer structure in a wireless communication system to which the present invention may be applied.
FIG. 8 illustrates a tracking area update procedure in a wireless communication system to which the present invention may be applied.
FIG. 9 is a diagram illustrating machine-type communication (MTC) architecture in a wireless communication system to which the present invention may be applied.
FIG. 10 illustrates architecture for Service Capability Exposure in a wireless communication system to which the present invention may be applied.
FIG. 11 illustrates an Attach procedure and PDN Connectivity procedure in a wireless communication system to which the present invention may be applied.
FIG. 12 illustrates a PDN disconnect procedure in a wireless communication system to which the present invention may be applied.
FIG. 13 is a diagram for illustrating an eDRX activation-related operation within an emergency bearer service activation period in a wireless communication system to which the present invention may be applied.
FIG. 14 is a diagram illustrating a method for supporting eDRX activation according to an embodiment of the present invention.
FIG. 15 illustrates a block diagram of a communication apparatus according to an embodiment of the present invention.
FIG. 16 illustrates a block diagram of a communication apparatus according to an embodiment of the present invention.

### [Description]

The disclosure in the following part of the description is to be considered related to the claimed invention.

The invention foresees a method for supporting extended idle mode discontinuous reception, eDRX, activation in a wireless communication system, the method comprising: transmitting, by a user equipment, a tracking area update, TAU, request message to a mobility management entity, MME, when a triggering condition of a TAU procedure is satisfied; and receiving, by the user equipment, a TAU accept message from the MME in response to the TAU request message, characterized by resuming, by the user equipment, eDRX, based on i) a packet data network, PDN, connection for an emergency bearer service being released and ii) an eDRX parameter having provided by the MME during the last TAU procedure, wherein based on the user equipment having the PDN connection for an emergency bearer service, i) the eDRX parameter is negotiated between the user equipment and the MME during the TAU procedure and I ii) the eDRX is not used by the user equipment. In addition the method may foresee when the user equipment requests the use of eDRX, if the user equipment has included a first eDRX parameter in the TAU request message and the MME accepts the eDRX use of the user equipment, a second eDRX parameter is included in the TAU accept message and the eDRX parameter is negotiated. In addition the method may foresee when the user equipment transmits an attach request message indicative of emergency attach in an evolved packet system, EPS , attach type information element to the MME, an attach procedure is initiated, and when the attach procedure is successfully completed, the PDN connection for the emergency bearer service is established. In addition themethod may foresees when the user equipment transmits a PDN connectivity request message having a request type set as an emergency to the MME, a PDN connectivity procedure is initiated, and when the PDN connectivity procedure is successfully completed, the PDN connection for the emergency bearer service is established. In addition the method may foresee when the user equipment transmits a PDN disconnect request message to the MME in order to request a release of the PDN connection for the emergency bearer service, a PDN disconnect procedure is initiated, and when the PDN disconnect procedure is successfully completed, the PDN connection for the emergency bearer service is released. In additon the method may foresee when the MME transmits a deactivate EPS bearer context request message to the user equipment in order to deactivate a bearer associated with the PDN connection for the emergency bearer service, an EPS bearer context deactivation procedure is initiated, and when the EPS bearer context deactivation procedure is successfully completed, the PDN connection for the emergency bearer service is released.

The invention foresees a method for supporting extended idle mode discontinuous reception, eDRX, activation in a wireless communication system, the method comprising: receiving, by a mobility management entity, MME, a tracking area update, TAU, message from a user equipment; and transmitting, by the MME, a TAU accept message to the user equipment in response to the TAU request message, characterized in that based on i) a packet data network, PDN, connection for an emergency bearer service being released and ii) an eDRX parameter having provided by the MME to the user equipment during the last TAU procedure, the eDRX use of the user equipment is resumed, and wherein based on the user equipment having the PDN connection for an emergency bearer service, i) the eDRX parameter is negotiated between the user equipment and the MME during the TAU procedure and ii) the eDRX is not used by the user equipment.

In addition the method may foresee when the user equipment requests the use of eDRX, if the user equipment has included a first eDRX parameter in the TAU request message and the MME accepts the eDRX use of the user equipment, a second eDRX parameter is included in the TAU accept message and the eDRX parameter is negotiated.

The invention foresees a user equipment, UE (1520), for supporting extended idle mode discontinuous reception, eDRX, activation, in a wireless communication system, the UE (1520) comprising: a transceiver (1523); at least one processor (1521); and at least one computer memory (1522) operable connectable to the at least one processor (1521) and storing instructions that, when executed by the at least one processor (1521), perform operations comprising: transmitting, via the transceiver (1523), a tracking area update, TAU, request message to a mobility management entity, MME (1510), when a triggering condition of a tracking area update procedure is satisfied; and receiving, via the transceiver (1523), a TAU accept message from the MME (1510) in response to the TAU request message, characterized in that when executed by the at least one processor (1521), perform operations comprising: resuming, eDRX, based on i) a packet data network, PDN, connection for an emergency bearer service being released and ii) an eDRX parameter having provided by the MME (1510) during the last TAU procedure, wherein based on the UE (1520) having the PDN connection for an emergency bearer service, i) the eDRX parameter is negotiated between the UE (1520) and the MME (1510) during the TAU procedure and ii) the eDRX is not used by the UE (1520).

In addition the UE may foresee when the UE (1520) requests the use of eDRX, if the UE (1520) has included a first eDRX parameter in the TAU request message and the MME (1510) accepts the eDRX use of the UE (1520), a second eDRX parameter is included in the TAU accept message and the eDRX parameter is negotiated.

In addition the UE may foresee when the UE (1520) transmits an attach request message indicative of emergency attach in an evolved packet system, EPS, attach type information element to the MME (1510), an attach procedure is initiated, and when the attach procedure is successfully completed, the PDN connection for the emergency bearer service is established.

In addition the UE may foresee when the UE (1520) transmits a PDN connectivity request message having a request type set as an emergency to the MME (1510), a PDN connectivity procedure is initiated, and when the PDN connectivity procedure is successfully completed, the PDN connection for the emergency bearer service is established.

In addition teh UE may foresee when the UE (1520) transmits a PDN disconnect request message to the MME (1510) in order to request a release of the PDN connection for the emergency bearer service, a PDN disconnect procedure is initiated, and when the PDN disconnect procedure is successfully completed, the PDN connection for the emergency bearer service is released.

In addition the UE may foresee when the MME (1510) transmits a deactivate EPS bearer context request message to the UE (1520) in order to deactivate a bearer associated with the PDN connection for the emergency bearer service, an EPS bearer context deactivation procedure is initiated, and when the EPS bearer context deactivation procedure is successfully completed, the PDN connection for the emergency bearer service is released.

The examples, aspects, and embodiments in the following part of the description are not according to the claimed invention and are present for illustration purposes only.

A base station in this document is regarded as a terminal node of a network, which performs communication directly with a UE. In this document, particular operations regarded to be performed by the base station may be performed by a upper node of the base station depending on situations. In other words, it is apparent that in a network consisting of a plurality of network nodes including a base station, various operations performed for communication with a UE can be performed by the base station or by network nodes other than the base station. The term Base Station (BS) can be replaced with a fixed station, Node B, evolved-NodeB (eNB), Base Transceiver System (BTS), or Access Point (AP). Also, a terminal can be fixed or mobile; and the term can be replaced with User Equipment (UE), Mobile Station (MS), User Terminal (UT), Mobile Subscriber Station (MSS), Subscriber Station (SS), Advanced Mobile Station (AMS), Wireless Terminal (WT), Machine-Type Communication (MTC) device, Machine-to-Machine (M2M) device, or Device-to-Device (D2D) device.

In what follows, downlink (DL) refers to communication from a base station to a terminal, while uplink (UL) refers to communication from a terminal to a base station. In downlink transmission, a transmitter can be part of the base station, and a receiver can be part of the terminal. Similarly, in uplink transmission, a transmitter can be part of the terminal, and a receiver can be part of the base station.

Specific terms used in the following descriptions are introduced to help understanding the present invention, and the specific terms can be used in different ways as long as it does not leave the technical scope of the present invention.

The technology described below can be used for various types of wireless access systems based on Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), or Non-Orthogonal Multiple Access (NOMA). CDMA can be implemented by such radio technology as Universal Terrestrial Radio Access (UTRA) or CDMA2000. TDMA can be implemented by such radio technology as Global System for Mobile communications (GSM), General Packet Radio Service (GPRS), or Enhanced Data rates for GSM Evolution (EDGE). OFDMA can be implemented by such radio technology as the IEEE 802.11 (Wi-Fi), the IEEE 802.16 (WiMAX), the IEEE 802-20, or Evolved UTRA (E-UTRA). UTRA is part of the Universal Mobile Telecommunications System (UMTS). The 3rd Generation Partnership Project (3GPP) Long Term Evolution (LTE) is part of the Evolved UMTS (E-UMTS) which uses the E-UTRA, employing OFDMA for downlink and SC-FDMA for uplink transmission. The LTE-A (Advanced) is an evolved version of the 3GPP LTE system.

Embodiments of the present invention can be supported by standard documents disclosed in at least one of wireless access systems including the IEEE 802, 3GPP, and 3GPP2 specifications. In other words, among the embodiments of the present invention, those steps or parts omitted for the purpose of clearly describing technical principles of the present invention can be supported by the documents above. Also, all of the terms disclosed in this document can be explained with reference to the standard documents.

To clarify the descriptions, this document is based on the 3GPP LTE/LTE-A, but the technical features of the present invention are not limited to the current descriptions.

Terms used in this document are defined as follows.
- Universal Mobile Telecommunication System (UMTS): the 3rd generation mobile communication technology based on GSM, developed by the 3GPP
- Evolved Packet System (EPS): a network system comprising an Evolved Packet Core (EPC), a packet switched core network based on the Internet Protocol (IP) and an access network such as the LTE and UTRAN. The EPS is a network evolved from the UMTS.
- NodeB: the base station of the UMTS network. NodeB is installed outside and provides coverage of a macro cell.
- eNodeB: the base station of the EPS network. An eNodeB is installed outside and provides coverage of a macro cell.
- User Equipment (UE): A UE can be called a terminal, Mobile Equipment (ME), or Mobile Station (MS). A UE can be a portable device such as a notebook computer, mobile phone, Personal Digital Assistant (PDA), smart phone, or a multimedia device; or a fixed device such as a Personal Computer (PC) or vehicle-mounted device. The term UE may refer to an MTC terminal in the description related to MTC.
- IP Multimedia Subsystem (IMS): a sub-system providing multimedia services based on the IP
- International Mobile Subscriber Identity (IMSI): a globally unique subscriber identifier assigned in a mobile communication network
- Machine Type Communication (MTC): communication performed by machines without human intervention. It may be called Machine-to-Machine (M2M) communication.
- MTC terminal (MTC UE or MTC device): a terminal (for example, a vending machine, meter, and so on) equipped with a communication function operating through a mobile communication network(For example, communicating with an MTC server via a PLMN) and performing an MTC function
- MTC server: a server on a network managing MTC terminals. It can be installed inside or outside a mobile communication network. It can provide an interface through which an MTC user can access the server. Also, an MTC server can provide MTC-related services to other servers (in the form of Services Capability Server (SCS)) or the MTC server itself can be an MTC Application Server.
- (MTC) application: services (to which MTC is applied) (for example, remote metering, traffic movement tracking, weather observation sensors, and so on)
- (MTC) Application Server: a server on a network in which (MTC) applications are performed
- MTC feature: a function of a network to support MTC applications. For example, MTC monitoring is a feature intended to prepare for loss of a device in an MTC application such as remote metering, and low mobility is a feature intended for an MTC application with respect to an MTC terminal such as a vending machine.
- MTC User (MTC User): The MTC user uses the service provided by the MTC server.
- MTC subscriber: an entity having a connection relationship with a network operator and providing services to one or more MTC terminals.
- MTC group: an MTC group shares at least one or more MTC features and denotes a group of MTC terminals belonging to MTC subscribers.
- Services Capability Server (SCS): an entity being connected to the 3GPP network and used for communicating with an MTC InterWorking Function (MTC-IWF) on a Home PLMN (HPLMN) and an MTC terminal. The SCS provides the capability for use by one or more MTC applications.
- External identifier: a globally unique identifier used by an external entity (for example, an SCS or an Application Server) of the 3GPP network to indicate (or identify) an MTC terminal (or a subscriber to which the MTC terminal belongs). An external identifier comprises a domain identifier and a local identifier as described below.
- Domain identifier: an identifier used for identifying a domain in the control region of a mobile communication network service provider. A service provider can use a separate domain identifier for each service to provide an access to a different service.
- Local identifier: an identifier used for deriving or obtaining an International Mobile Subscriber Identity (IMSI). A local identifier should be unique within an application domain and is managed by a mobile communication network service provider.
- Radio Access Network (RAN): a unit including a Node B, a Radio Network Controller (RNC) controlling the Node B, and an eNodeB in the 3GPP network. The RAN is defined at the terminal level and provides a connection to a core network.
- Home Location Register (HLR)/Home Subscriber Server (HSS): a database provisioning subscriber information within the 3GPP network. An HSS can perform functions of configuration storage, identity management, user state storage, and so on.
- RAN Application Part (RANAP): an interface between the RAN and a node in charge of controlling a core network (in other words, a Mobility Management Entity (MME)/Serving GPRS (General Packet Radio Service) Supporting Node (SGSN)/Mobile Switching Center (MSC)).
- Public Land Mobile Network (PLMN): a network formed to provide mobile communication services to individuals. The PLMN can be formed separately for each operator.
- Non-Access Stratum (NAS): a functional layer for exchanging signals and traffic messages between a terminal and a core network at the UMTS and EPS protocol stack. The NAS is used primarily for supporting mobility of a terminal and a session management procedure for establishing and maintaining an IP connection between the terminal and a PDN GW.
- Service Capability Exposure Function (SCEF): An entity within the 3GPP architecture for service capability exposure that provides a means for securely exposing services and capabilities provided by 3GPP network interfaces.

In what follows, the present invention will be described based on the terms defined above.

### [Overview of system to which the present invention may be applied

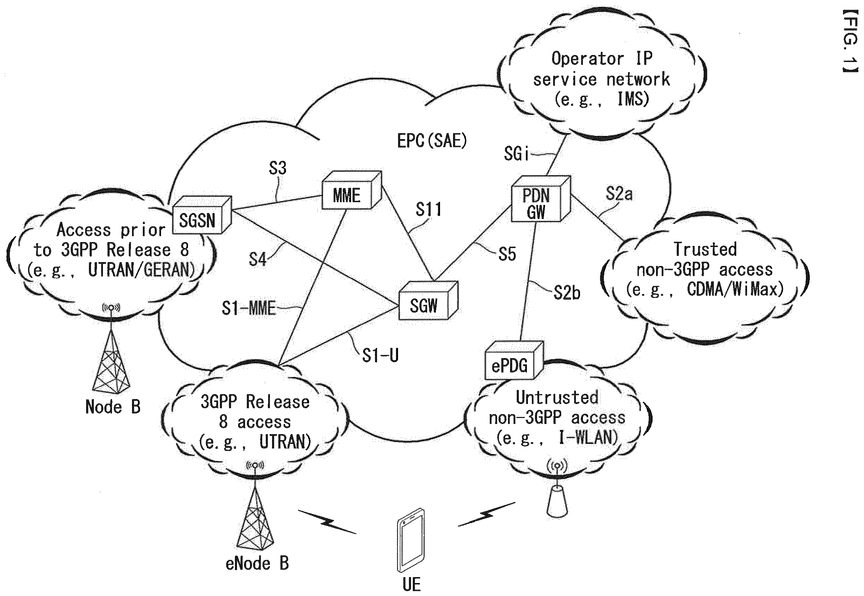

FIG. 1 illustrates an Evolved Packet System (EPS) to which the present invention can be applied.

The network structure of FIG. 1 is a simplified diagram restructured from an Evolved Packet System (EPS) including Evolved Packet Core (EPC).

The EPC is a main component of the System Architecture Evolution (SAE) intended for improving performance of the 3GPP technologies. SAE is a research project for determining a network structure supporting mobility between multiple heterogeneous networks. For example, SAE is intended to provide an optimized packet-based system which supports various IP-based wireless access technologies, provides much more improved data transmission capability, and so on.

More specifically, the EPC is the core network of an IP-based mobile communication system for the 3GPP LTE system and capable of supporting packet-based real-time and non-real time services. In the existing mobile communication systems (namely, in the 2nd or 3rd mobile communication system), functions of the core network have been implemented through two separate sub-domains: a Circuit-Switched (CS) sub-domain for voice and a Packet-Switched (PS) sub-domain for data. However, in the 3GPP LTE system, an evolution from the 3rd mobile communication system, the CS and PS sub-domains have been unified into a single IP domain. In other words, in the 3GPP LTE system, connection between UEs having IP capabilities can be established through an IP-based base station (for example, eNodeB), EPC, and application domain (for example, IMS). In other words, the EPC provides the architecture essential for implementing end-to-end IP services.

The EPC comprises various components, where FIG. 1 illustrates part of the EPC components, including a Serving Gateway (SGW or S-GW), Packet Data Network Gateway (PDN GW or PGW or P-GW), Mobility Management Entity (MME), Serving GPRS Supporting Node (SGSN), and enhanced Packet Data Gateway (ePDG).

The SGW operates as a boundary point between the Radio Access Network (RAN) and the core network and maintains a data path between the eNodeB and the PDN GW. Also, in case the UE moves across serving areas by the eNodeB, the SGW acts as an anchor point for local mobility. In other words, packets can be routed through the SGW to ensure mobility within the E-UTRAN (Evolved-UMTS (Universal Mobile Telecommunications System) Terrestrial Radio Access Network defined for the subsequent versions of the 3GPP release 8). Also, the SGW may act as an anchor point for mobility between the E-UTRAN and other 3GPP networks (the RAN defined before the 3GPP release 8, for example, UTRAN or GERAN (GSM (Global System for Mobile Communication)/EDGE (Enhanced Data rates for Global Evolution) Radio Access Network).

The PDN GW corresponds to a termination point of a data interface to a packet data network. The PDN GW can support policy enforcement features, packet filtering, charging support, and so on. Also, the PDN GW can act as an anchor point for mobility management between the 3GPP network and non-3GPP networks (for example, an unreliable network such as the Interworking Wireless Local Area Network (I-WLAN) or reliable networks such as the Code Division Multiple Access (CDMA) network and WiMax).

In the example of a network structure as shown in FIG. 1, the SGW and the PDN GW are treated as separate gateways; however, the two gateways can be implemented according to single gateway configuration option.

The MME performs signaling for the UE's access to the network, supporting allocation, tracking, paging, roaming, handover of network resources, and so on; and control functions. The MME controls control plane functions related to subscribers and session management. The MME manages a plurality of eNodeBs and performs signaling of the conventional gateway's selection for handover to other 2G/3G networks. Also, the MME performs such functions as security procedures, terminal-to-network session handling, idle terminal location management, and so on.

The SGSN deals with all kinds of packet data including the packet data for mobility management and authentication of the user with respect to other 3GPP networks (for example, the GPRS network).

The ePDG acts as a security node with respect to an unreliable, non-3GPP network (for example, I-WLAN, WiFi hotspot, and so on).

As described with respect to FIG. 1, a UE with the IP capability can access the IP service network (for example, the IMS) that a service provider (namely, an operator) provides, via various components within the EPC based not only on the 3GPP access but also on the non-3GPP access.

Also, FIG. 1 illustrates various reference points (for example, S1-U, S1-MME, and so on). The 3GPP system defines a reference point as a conceptual link which connects two functions defined in disparate functional entities of the E-UTAN and the EPC. Table 1 below summarizes reference points shown in FIG. 1. In addition to the examples of FIG. 1, various other reference points can be defined according to network structures.

**[Table 1]**

| Reference point | Description |
|---|---|
| S1-MME | Reference point for the control plane protocol between E-UTRAN and MME |
| S1-U | Reference point between E-UTRAN and Serving GW for the per bearer user plane tunneling and inter eNodeB path switching during handover |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS core and the 3GPP anchor function of Serving GW. In addition, if direct tunnel is not established, it provides the user plane tunneling. |
| S5 | It provides user plane tunneling and tunnel management between Serving GW and PDN GW. It is used for Serving GW relocation due to UE mobility if the Serving GW needs to connect to a non-collocated PDN GW for the required PDN connectivity. |
| S11 | Reference point for the control plane protocol between MME and SGW |
| SGi | It is the reference point between the PDN GW and the packet data |
| | network. Packet data network may be an operator external public or private packet data network or an intra-operator packet data network (e.g., for provision of IMS services). This reference point corresponds to Gi for 3GPP accesses. |

Among the reference points shown in FIG. 1, S2a and S2b corresponds to non-3GPP interfaces. S2a is a reference point which provides reliable, non-3GPP access, related control between PDN GWs, and mobility resources to the user plane. S2b is a reference point which provides related control and mobility resources to the user plane between ePDG and PDN GW.

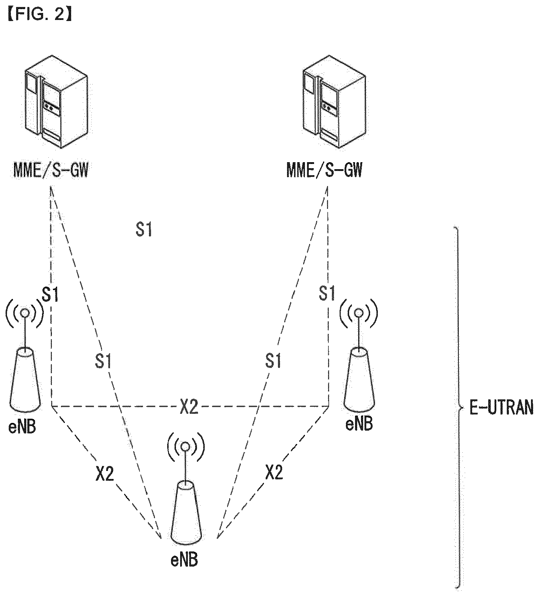

FIG. 2 illustrates one example of an Evolved Universal Terrestrial Radio Access Network (E-UTRAN) to which the present invention can be applied.

The E-UTRAN system is an evolved version of the existing UTRAN system, for example, and is also referred to as 3GPP LTE/LTE-A system. Communication network is widely deployed in order to provide various communication services such as voice (e.g., Voice over Internet Protocol (VoIP)) through IMS and packet data.

Referring to FIG. 2, E-UMTS network includes E-UTRAN, EPC and one or more UEs. The E-UTRAN includes eNBs that provide control plane and user plane protocol, and the eNBs are interconnected with each other by means of the X2 interface.

The X2 user plane interface (X2-U) is defined among the eNBs. The X2-U interface provides non-guaranteed delivery of the user plane Packet Data Unit (PDU). The X2 control plane interface (X2-CP) is defined between two neighboring eNBs. The X2-CP performs the functions of context delivery between eNBs, control of user plane tunnel between a source eNB and a target eNB, delivery of handover-related messages, uplink load management, and so on.

The eNB is connected to the UE through a radio interface and is connected to the Evolved Packet Core (EPC) through the S1 interface.

The S1 user plane interface (S1-U) is defined between the eNB and the Serving Gateway (S-GW). The S1 control plane interface (S1-MME) is defined between the eNB and the Mobility Management Entity (MME). The S1 interface performs the functions of EPS bearer service management, non-access stratum (NAS) signaling transport, network sharing, MME load balancing management, and so on. The S1 interface supports many-to-many-relation between the eNB and the MME/S-GW.

The MME may perform various functions such as NAS signaling security, Access Stratum (AS) security control, Core Network (CN) inter-node signaling for supporting mobility between 3GPP access network, IDLE mode UE reachability (including performing paging retransmission and control), Tracking Area Identity (TAI) management (for UEs in idle and active mode), selecting PDN GW and SGW, selecting MME for handover of which the MME is changed, selecting SGSN for handover to 2G or 3G 3GPP access network, roaming, authentication, bearer management function including dedicated bearer establishment, Public Warning System (PWS) (including Earthquake and Tsunami Warning System (ETWS) and Commercial Mobile Alert System (CMAS), supporting message transmission and so on.

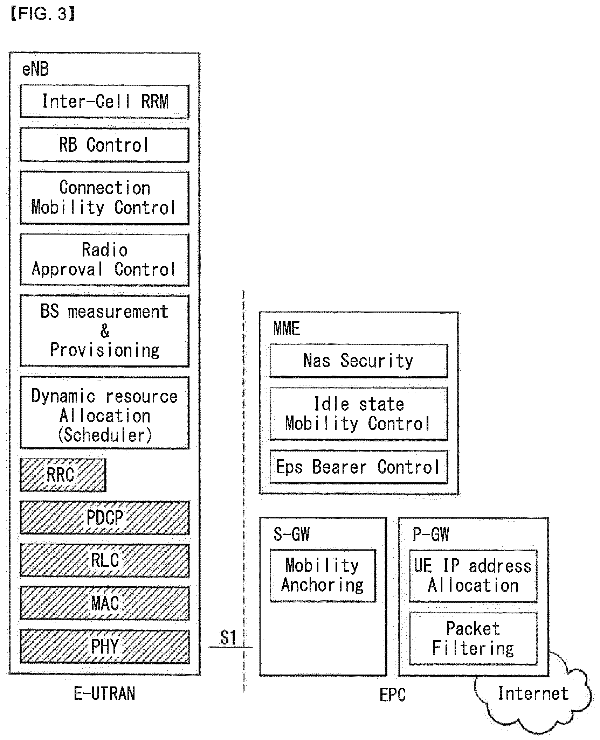

FIG. 3 exemplifies a structure of E-UTRAN and EPC in a wireless communication system to which the present invention can be applied.

Referring to FIG. 3, an eNB may perform functions of selecting gateway (e.g., MME), routing to gateway during radio resource control (RRC) is activated, scheduling and transmitting broadcast channel (BCH), dynamic resource allocation to UE in uplink and downlink, mobility control connection in LTE_ACTIVE state. As described above, the gateway in EPC may perform functions of paging origination, LTE_IDLE state management, ciphering of user plane, bearer control of System Architecture Evolution (SAE), ciphering of NAS signaling and integrity protection.

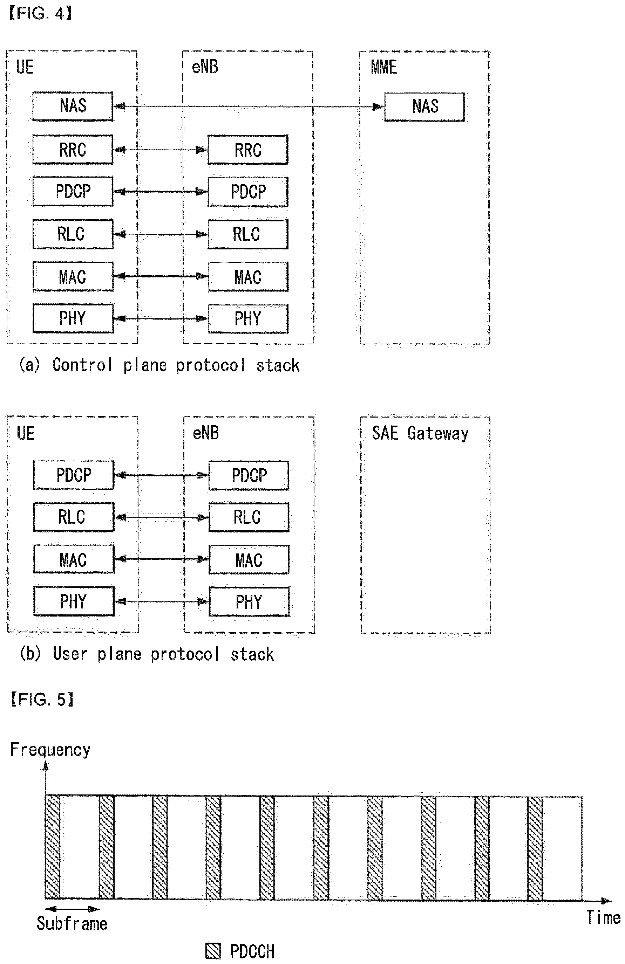

FIG. 4 illustrates a radio interface protocol structure between a UE and an E-UTRAN in a wireless communication system to which the present invention can be applied.

FIG. 4(a) illustrates a radio protocol structure for the control plane, and FIG. 4(b) illustrates a radio protocol structure for the user plane.

With reference to FIG. 4, layers of the radio interface protocol between the UE and the E-UTRAN can be divided into a first layer (L1), a second layer (L2), and a third layer (L3) based on the lower three layers of the Open System Interconnection (OSI) model, widely known in the technical field of communication systems. The radio interface protocol between the UE and the E-UTRAN consists of the physical layer, data link layer, and network layer in the horizontal direction, while in the vertical direction, the radio interface protocol consists of the user plane, which is a protocol stack for delivery of data information, and the control plane, which is a protocol stack for delivery of control signals.

The control plane acts as a path through which control messages used for the UE and the network to manage calls are transmitted. The user plane refers to the path through which the data generated in the application layer, for example, voice data, Internet packet data, and so on are transmitted. In what follows, described will be each layer of the control and the user plane of the radio protocol.

The physical layer (PHY), which is the first layer (L1), provides information transfer service to upper layers by using a physical channel. The physical layer is connected to the Medium Access Control (MAC) layer located at the upper level through a transport channel through which data are transmitted between the MAC layer and the physical layer. Transport channels are classified according to how and with which features data are transmitted through the radio interface. And data are transmitted through the physical channel between different physical layers and between the physical layer of a transmitter and the physical layer of a receiver. The physical layer is modulated according to the Orthogonal Frequency Division Multiplexing (OFDM) scheme and employs time and frequency as radio resources.

A few physical control channels are used in the physical layer. The Physical Downlink Control Channel (PDCCH) informs the UE of resource allocation of the Paging Channel (PCH) and the Downlink Shared Channel (DL-SCH); and Hybrid Automatic Repeat reQuest (HARQ) information related to the Uplink Shared Channel (UL-SCH). Also, the PDCCH can carry a UL grant used for informing the UE of resource allocation of uplink transmission. The Physical Control Format Indicator Channel (PCFICH) informs the UE of the number of OFDM symbols used by PDCCHs and is transmitted at each subframe. The Physical HARQ Indicator Channel (PHICH) carries a HARQ ACK (ACKnowledge)/NACK (Non-ACKnowledge) signal in response to uplink transmission. The Physical Uplink Control Channel (PUCCH) carries uplink control information such as HARQ ACK/NACK with respect to downlink transmission, scheduling request, Channel Quality Indicator (CQI), and so on. The Physical Uplink Shared Channel (PUSCH) carries the UL-SCH.

The MAC layer of the second layer (L2) provides a service to the Radio Link Control (RLC) layer, which is an upper layer thereof, through a logical channel. Also, the MAC layer provides a function of mapping between a logical channel and a transport channel; and multiplexing/demultiplexing a MAC Service Data Unit (SDU) belonging to the logical channel to the transport block, which is provided to a physical channel on the transport channel.

The RLC layer of the second layer (L2) supports reliable data transmission. The function of the RLC layer includes concatenation, segmentation, reassembly of the RLC SDU, and so on. To satisfy varying Quality of Service (QoS) requested by a Radio Bearer (RB), the RLC layer provides three operation modes: Transparent Mode (TM), Unacknowledged Mode (UM), and Acknowledge Mode (AM). The AM RLC provides error correction through Automatic Repeat reQuest (ARQ). Meanwhile, in case the MAC layer performs the RLC function, the RLC layer can be incorporated into the MAC layer as a functional block.

The Packet Data Convergence Protocol (PDCP) layer of the second layer (L2) performs the function of delivering, header compression, ciphering of user data in the user plane, and so on. Header compression refers to the function of reducing the size of the Internet Protocol (IP) packet header which is relatively large and contains unnecessary control to efficiently transmit IP packets such as the IPv4 (Internet Protocol version 4) or IPv6 (Internet Protocol version 6) packets through a radio interface with narrow bandwidth. The function of the PDCP layer in the control plane includes delivering control plane data and ciphering/integrity protection.

The Radio Resource Control (RRC) layer in the lowest part of the third layer (L3) is defined only in the control plane. The RRC layer performs the role of controlling radio resources between the UE and the network. To this purpose, the UE and the network exchange RRC messages through the RRC layer. The RRC layer controls a logical channel, transport channel, and physical channel with respect to configuration, re-configuration, and release of radio bearers. A radio bearer refers to a logical path that the second layer (L2) provides for data transmission between the UE and the network. Configuring a radio bearer indicates that characteristics of a radio protocol layer and channel are defined to provide specific services; and each individual parameter and operating methods thereof are determined. Radio bearers can be divided into Signaling Radio Bearers (SRBs) and Data RBs (DRBs). An SRB is used as a path for transmitting an RRC message in the control plane, while a DRB is used as a path for transmitting user data in the user plane.

The Non-Access Stratum (NAS) layer in the upper of the RRC layer performs the function of session management, mobility management, and so on.

A cell constituting the base station is set to one of 1.25, 2.5, 5, 10, and 20 MHz bandwidth, providing downlink or uplink transmission services to a plurality of UEs. Different cells can be set to different bandwidths.

Downlink transport channels transmitting data from a network to a UE include a Broadcast Channel (BCH) transmitting system information, PCH transmitting paging messages, DL-SCH transmitting user traffic or control messages, and so on. Traffic or a control message of a downlink multi-cast or broadcast service can be transmitted through the DL-SCH or through a separate downlink Multicast Channel (MCH). Meanwhile, uplink transport channels transmitting data from a UE to a network include a Random Access Channel (RACH) transmitting the initial control message and a Uplink Shared Channel (UL-SCH) transmitting user traffic or control messages.

Logical channels, which are located above the transport channels and are mapped to the transport channels. The logical channels may be distinguished by control channels for delivering control area information and traffic channels for delivering user area information. The control channels include a Broadcast Control Channel (BCCH), a Paging Control Channel (PCCH), a Common Control Channel (CCCH), a dedicated control channel (DCCH), a Multicast Control Channel (MCCH), and etc. The traffic channels include a dedicated traffic channel (DTCH), and a Multicast Traffic Channel (MTCH), etc. The PCCH is a downlink channel that delivers paging information, and is used when network does not know the cell where a UE belongs. The CCCH is used by a UE that does not have RRC connection with network. The MCCH is a point-to-multipoint downlink channel which is used for delivering Multimedia Broadcast and Multicast Service (MBMS) control information from network to UE. The DCCH is a point-to-point bi-directional channel which is used by a UE that has RRC connection delivering dedicated control information between UE and network. The DTCH is a point-to-point channel which is dedicated to a UE for delivering user information that may be existed in uplink and downlink. The MTCH is a point-to-multipoint downlink channel for delivering traffic data from network to UE.

In case of uplink connection between the logical channel and the transport channel, the DCCH may be mapped to UL-SCH, the DTCH may be mapped to UL-SCH, and the CCCH may be mapped to UL-SCH. In case of downlink connection between the logical channel and the transport channel, the BCCH may be mapped to BCH or DL-SCH, the PCCH may be mapped to PCH, the DCCH may be mapped to DL-SCH, the DTCH may be mapped to DL-SCH, the MCCH may be mapped to MCH, and the MTCH may be mapped to MCH.

FIG. 5 is a diagram schematically exemplifying a structure of physical channel in a wireless communication system to which the present invention can be applied.

Referring to FIG. 5, the physical channel delivers signaling and data through radio resources including one or more subcarriers in frequency domain and one or more symbols in time domain.

One subframe that has a length of 1.0 ms includes a plurality of symbols. A specific symbol (s) of subframe (e.g., the first symbol of subframe) may be used for PDCCH. The PDCCH carries information for resources which are dynamically allocated (e.g., resource block, modulation and coding scheme (MCS), etc.).

### Random Access Procedure

Hereinafter, a random access procedure which is provided in a LTE/LTE-A system will be described.

The random access procedure is performed in case that the UE performs an initial access in a RRC idle state without any RRC connection to an eNB, or the UE performs a RRC connection re-establishment procedure, etc.

The LTE/LTE-A system provides both of the contention-based random access procedure that the UE randomly selects to use one preamble in a specific set and the non-contention-based random access procedure that the eNB uses the random access preamble that is allocated to a specific UE.

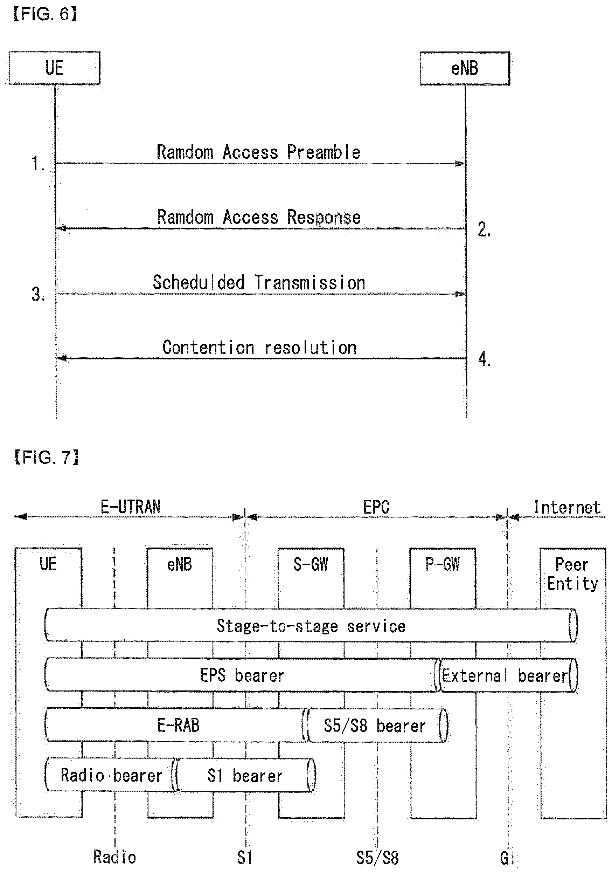

FIG. 6 is a diagram for describing the contention-based random access procedure in the wireless communication system to which the present invention can be applied.

### (1) Message 1 (Msg 1)

First, the UE randomly selects one random access preamble (RACH preamble) from the set of the random access preamble that is instructed through system information or handover command, selects and transmits physical RACH (PRACH) resource which is able to transmit the random access preamble.

The eNB that receives the random access preamble from the UE decodes the preamble and acquires RA-RNTI. The RA-RNTI associated with the PRACH to which the random access preamble is transmitted is determined according to the time-frequency resource of the random access preamble that is transmitted by the corresponding UE.

### (2) Message 2 (Msg 2)

The eNB transmits the random access response that is addressed to RA-RNTI that is acquired through the preamble on the Msg 1 to the UE. The random access response may include RA preamble index/identifier, UL grant that informs the UL radio resource, temporary cell RNTI (TC-RNTI), and time alignment command (TAC). The TAC is the information indicating a time synchronization value that is transmitted by the eNB in order to keep the UL time alignment. The UE renews the UL transmission timing using the time synchronization value. On the renewal of the time synchronization value, the UE renews or restarts the time alignment timer. The UL grant includes the UL resource allocation that is used for transmission of the scheduling message to be described later (Message 3) and the transmit power command (TPC). The TCP is used for determination of the transmission power for the scheduled PUSCH.

The UE, after transmitting the random access preamble, tries to receive the random access response of its own within the random access response window that is instructed by the eNB with system information or handover command, detects the PDCCH masked with RA-RNTI that corresponds to PRACH, and receives the PDSCH that is indicated by the detected PDCCH. The random access response information may be transmitted in a MAC packet data unit and the MAC PDU may be delivered through PDSCH.

The UE terminates monitoring of the random access response if successfully receiving the random access response having the random access preamble index/identifier same as the random access preamble that is transmitted to the eNB. Meanwhile, if the random access response message has not been received until the random access response window is terminated, or if not received a valid random access response having the random access preamble index same as the random access preamble that is transmitted to the eNB, it is considered that the receipt of random access response is failed, and after that, the UE may perform the retransmission of preamble.

### (3) Message 3 (Msg 3)

In case that the UE receives the random access response that is effective with the UE itself, the UE processes the information included in the random access response respectively. That is, the UE applies TAC and stores TC-RNTI. Also, by using UL grant, the UE transmits the data stored in the buffer of UE or the data newly generated to the eNB.

In case of the initial access of UE, the RRC connection request that is delivered through CCCH after generating in RRC layer may be transmitted with being included in the message 3. In case of the RRC connection reestablishment procedure, the RRC connection reestablishment request that is delivered through CCCH after generating in RRC layer may be transmitted with being included in the message 3. Additionally, NAS access request message may be included.

The message 3 should include the identifier of UE. There are two ways how to include the identifier of UE. The first method is that the UE transmits the cell RNTI (C-RNTI) of its own through the UL transmission signal corresponding to the UL grant, if the UE has a valid C-RNTI that is already allocated by the corresponding cell before the random access procedure. Meanwhile, if the UE has not been allocated a valid C-RNTI before the random access procedure, the UE transmits including unique identifier of its own (for example, S-TMSI or random number). Normally the above unique identifier is longer that C-RNTI.

If transmitting the data corresponding to the UL grant, the UE initiates a contention resolution timer.

### (4) Message 4 (Msg 4)

The eNB, in case of receiving the C-RNTI of corresponding UE through the message 3 from the UE, transmits the message 4 to the UE by using the received C-RNTI. Meanwhile, in case of receiving the unique identifier (that is, S-TMSI or random number) through the message 3 from the UE, the eNB transmits the 4 message to the UE by using the TC-RNTI that is allocated from the random access response to the corresponding UE. For example, the 4 message may include the RRC connection setup message.

The UE waits for the instruction of eNB for collision resolution after transmitting the data including the identifier of its own through the UL grant included the random access response. That is, the UE attempts the receipt of PDCCH in order to receive a specific message. There are two ways how to receive the PDCCH. As previously mentioned, in case that the message 3 transmitted in response to the UL grant includes C-RNTI as an identifier of its own, the UE attempts the receipt of PDCCH using the C-RNTI of itself, and in case that the above identifier is the unique identifier (that is, S-TMSI or random number), the UE tries to receive PDCCH using the TC-RNTI that is included in the random access response. After that, in the former case, if the PDCCH is received through the C-RNTI of its own before the contention resolution timer is terminated, the UE determines that the random access procedure is performed and terminates the procedure. In the latter case, if the PDCCH is received through the TC-RNTI before the contention resolution timer is terminated, the UE checks on the data that is delivered by PDSCH, which is addressed by the PDCCH. If the content of the data includes the unique identifier of its own, the UE terminates the random access procedure determining that a normal procedure has been performed. The UE acquires C-RNTI through the 4 message, and after that, the UE and network are to transmit and receive a UE-specific message by using the C-RNTI.

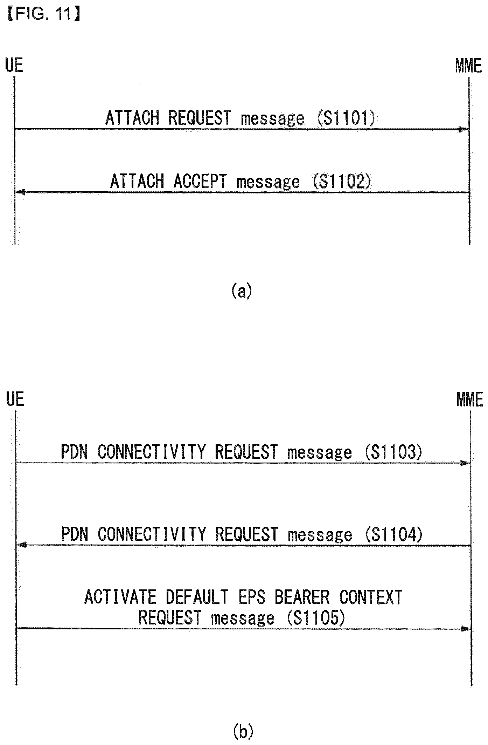

Meanwhile, the operation of the non-contention-based random access procedure, unlike the contention-based random access procedure illustrated in FIG. 11, is terminated with the transmission of message 1 and message 2 only. However, the UE is going to be allocated a random access preamble from the eNB before transmitting the random access preamble to the eNB as the message 1. And the UE transmits the allocated random access preamble to the eNB as the message 1, and terminates the random access procedure by receiving the random access response from the eNB.

### EMM and ECM state

An EPS mobility management (EMM) and EPS connection management (ECM) state are described.

In order to manage the mobility of a UE in an NAS layer located in the control plane of the UE and the MME, an EMM registration state (EMM-REGISTERED) and an EMM de-registration state (EMM-DEREGISTERED) may be defined depending on whether the UE has been attached to or detached from a network. The EMM-REGISTERED state and the EMM-DEREGISTERED state may be applied to the UE and the MME.

As in the case where power of a UE is first turned on, the UE is initially in the EMM-DEREGISTERED state, and the UE performs a process of being registered with a corresponding network through an initial Attach procedure. When the Attach procedure is successfully performed, the UE and an MME make transition to the EMM-REGISTERED state. Furthermore, when the UE is powered off or experiences a radio link failure (when a packet error rate in a radio link exceeds a reference value), the UE is detached from the network and makes transition to the EMM-DEREGISTERED state.

Furthermore, in order to manage a signaling connection between the UE and the network, an ECM connected state (ECM-CONNECTED) and an ECM idle state (ECM-IDLE) may be defined. The ECM-CONNECTED state and the ECM-IDLE state may also be applied to the UE and the MME. An ECM connection includes an RRC connection established between a UE and an eNB and an S1 signaling connection established between an eNB and an MME. That is, what the ECM connection has been established/released means that both the RRC connection and the S1 signaling connection have been established/released.

The RRC state indicates whether the RRC layer of a UE and the RRC layer of an eNB have been logically connected. That is, when the RRC layer of the UE and the RRC layer of the eNB are connected, the UE in the RRC Connected state (RRC_CONNECTED). When the RRC layer of the UE and the RRC layer of the eNB are not connected, the UE is in the RRC idle state (RRC_IDLE).

A network may confirm the presence of a UE in the ECM-CONNECTED state in a cell unit and effectively control the UE.

In contrast, a network cannot confirm the presence of a UE in the ECM-IDLE state, and a core network (CN) manages an area in a tracking area unit, that is, an area unit greater than a cell. When a UE is in the ECM idle state, the UE performs discontinuous reception (DRX) configured by the NAS using an identity uniquely allocated thereto in a tracking area. That is, the UE can receive the broadcasting of system information and paging information by monitoring a paging signal for mobile terminated call (MT) reception at a specific paging occasion every UE-specific paging DRX cycle.

Furthermore, the UE checks whether a mobile terminated call has been reached, and switches to the RRC_CONNECTE mode through a service request procedure if its own identity is included in a paging channel. Through such a network state definition, a UE not having an activated service can minimize its own power consumption, and an eNB can efficiently use resources.

Furthermore, when a UE is in the ECM-IDLE state, a network does not have context information of the UE. Accordingly, the UE in the ECM-IDLE state may perform a procedure related to UE-based mobility, such as cell selection or cell reselection, without a need to receive a command from the network. When the location of a UE in the ECM idle state is different from that known to a network or periodically, the UE may notify the network of its location through a tracking area update (TAU) procedure for network reachability update with an MME.

In contrast, when a UE is in the ECM-CONNECTED state, the mobility of the UE is managed by a command from a network. In the ECM-CONNECTED state, the network is aware of a cell to which the UE belongs. Accordingly, the network may transmit and/or receive data to and/or from the UE, may control mobility such as handover of the UE, and may perform cell measurement on a neighbor cell.

As described above, in order for a UE to receive a common mobile communication service such as voice or data, the UE needs to make transition to the ECM-CONNECTED state. As in the case where a UE is initially powered on, the UE is initially in the ECM-IDLE state as in the EMM state. When the UE is successfully registered with a corresponding network through an initial Attach procedure, the UE and an MME make transition to the ECM-CONNECTED state. Furthermore, if a UE has been registered with a network, but a radio resource has not been allocated to the UE because traffic is deactivated, the UE is in the ECM-IDLE state. When new uplink or downlink traffic occurs in the corresponding UE, the UE and the MME make transition to the ECM-CONNECTED state through a service request procedure.

### EPS bearer

FIG. 7 illustrates a bearer structure in a wireless communication system to which the present invention may be applied.

When a UE is connected to a packet data network (PDN) (a peer entity in FIG. 7), a PDN connection occurs, and the PDN connection may also be called an EPS session. The PDN is an operator-outside or inside Internet protocol (IP) network, and provides a service function, such as the Internet or an IP multimedia subsystem (IMS).

The EPS session has one or more EPS bearers. The EPS bearer is a transmission path of traffic generated between a UE and a PDN GW in order for an EPS to transfer user traffic. One or more EPS bearers may be configured per UE.

Each EPS bearer may be divided into an E-UTRAN radio access bearer (E-RAB) and an S5/S8 bearer. The E-RAB may be divided into a radio bearer (RB) and an S1 bearer. That is, one EPS bearer corresponds to one RB, one S1 bearer and one S5/S8 bearer.

The E-RAB delivers the packet of an EPS bearer between the UE and the EPC. If an E-RAB is present, an E-RAB bearer and an EPS bearer are mapped in a one-to-one manner. A data radio bearer (DRB) delivers the packet of the EPS bearer between the UE and the eNB. If a DRB is present, the DRB and the EPS bearer/E-RAB are mapped in a one-to-one manner. The S1 bearer delivers the packet of the EPS bearer between the eNB and the S-GW. The S5/S8 bearer delivers an EPS bearer packet between the S-GW and the P-GW.

The UE binds a service data flow (SDF) to an EPS bearer of an uplink direction. The SDF is an IP flow in which user traffic has been classified (or filtered) for each service or a collection of IP flows. A plurality of SDFs may be multiplexed with the same EPS bearer because it includes a plurality of uplink packet filters. The UE stores mapping information between an uplink packet filter and a DRB in order to bind the SDF and the DRB in the uplink.

The P-GW binds the SDF to an EPS bearer of a downlink direction. A plurality of SDFs may be multiplexed with the same EPS bearer because it includes a plurality of downlink packet filters. The P-GW stores mapping information between a downlink packet filter and the S5/S8 bearer in order to bind the SDF and the S5/S8 bearer in the downlink.

The eNB stores one-to-one mapping between the DRB and the S1 bearer in order to bind the DRB and the S1 bearer in the uplink/downlink. The S-GW stores one-to-one mapping information between the S1 bearer and the S5/S8 bearer in order to bind the S1 bearer and the S5/S8 bearer in the uplink/downlink.

The EPS bearer is divided into two types of a default bearer and a dedicated bearer. The UE may have one default bearer and one or more dedicated bearers per PDN. The least default bearer of an EPS session for one PDN is called a default bearer.

The EPS bearer may be classified based on an identity. The EPS bearer identity is allocated by the UE or the MME. The dedicated bearer(s) is combined with the default bearer by a linked EPS bearer identity (LBI).

When the UE is initially attached to a network through an initial Attach procedure, an Internet Protocol (IP) address is assigned to the UE, a PDN connection is generated, and thus a default bearer is generated in the EPS section. The default bearer is maintained without being released unless the PDN connection of the UE is terminated although there is no traffic between the UE and a corresponding PDN. When the corresponding PDN connection is terminated, the default bearer is also released. In this case, all the bearers of a section forming the default bearer with the UE is not released, but the S5 bearer directly connected to the PDN is maintained and the E-RAB bearers (i.e., the DRB and the S1 bearer) associated with radio resources are released. Furthermore, when new traffic occurs in a corresponding PDN, an E-RAB bearer is reconfigured to transfer traffic.

If the UE uses a service (e.g., video on demand (VoD)) insufficient to receive quality of service (QoS) using only a default bearer while using a service (e.g., the Internet) through the default bearer, a dedicated bearer is generated when the UE requests the dedicated bearer (upon on-demand). If there is no traffic from the UE, the dedicated bearer is released. The UE or a network may generate a plurality of dedicated bearers, if necessary.

### Tracking area update (TAU) procedure

A TAU procedure is one of mobility management procedures performed in the MME and is one of important functions for managing the mobility of a UE in the EPS.

Mobility-based TAU may be performed when entry into a new tracking area (TA) not present in a list of tracking area identities (TAI) is detected (i.e., when a tracking area is changed).

Furthermore, a periodic TAU procedure may be performed when a periodic TAU (P-TAU) timer configured in a UE expires after the UE enters the idle mode. The periodic TAU may be called a method for reachability check, wherein a network checks whether a UE is validly present in the network.

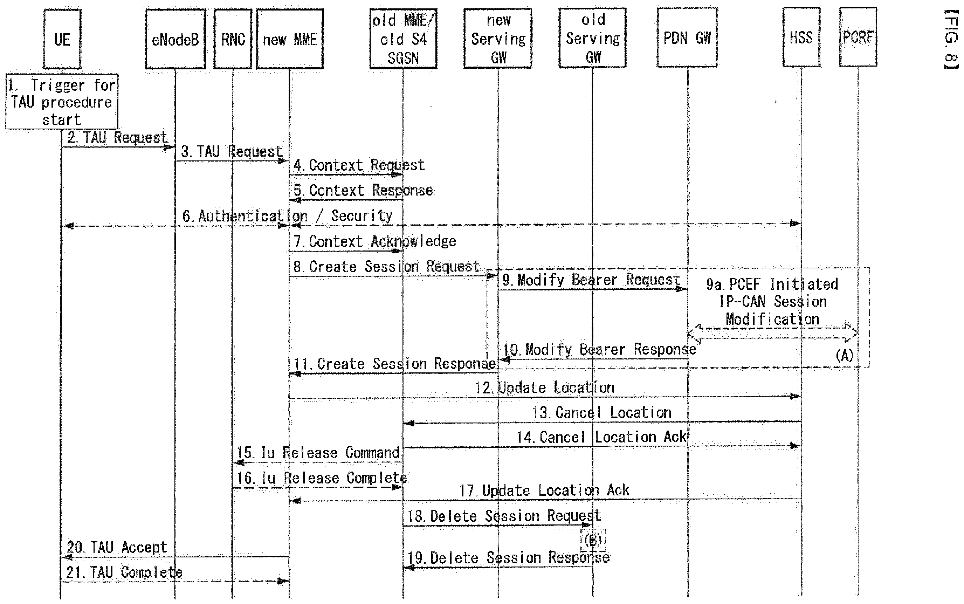

FIG. 8 illustrates a tracking area update procedure in a wireless communication system to which the present invention may be applied.

FIG. 8 illustrates a TAU procedure when a SGW is changed.
1-3. When the TAU timer of a UE in the ECM-IDLE state elapses or moves to another tracking area, a TAU procedure for reporting a tracking area (TA) to the MME is changed.
   The UE starts the TAU procedure by transmitting a TAU Request message to the MME.
   The TAU Request message is included in an RRC Connection Setup Complete message in RRC connection and delivered, and it is included in an initial UE message in S1 signaling connection and delivered.
   If the UE needs to use an extended idle mode DRX (eDRX), although an eDRX parameter has been previously negotiated (e.g., through an old Attach procedure or an old TAU procedure), the UE includes an eDRX parameter(s) information element (IE) in the TAU Request message.
4. If the MME that has received the TAU Request message is different (in type) from an old node (i.e., MME or SGSN) (i.e., if the MME has been changed), a new MME transmits a Context Request message to the old MME/SGSN in order to obtain user information (or UE context) from the old MME/SGSN.
5. When the Context Request message is transmitted to the old MME/SGSN, the old MME/SGSN transmits a Context Response message as a response. The Context Response message may include UE context.
6. The UE and a new MME and HSS perform an authentication function and security (or ciphering) procedure.
   The new MME determines whether to relocate the S-GW. If the old S-GW no longer provides a service to the UE, the S-GW is relocated. Furthermore, if it is expected that a new S-GW will provide a service to the UE longer and/or a P-GW path will be more suitable for the UE or the new S-GW is co-located with the P-GW, the new MME may determine to relocate the S-GW.
7. When the MME selects the new S-GW, the MME transmits a Create Session Request message to the new S-GW selected for each PDN connection.
8. If necessary, the new S-GW transmits a Modify Bearer Request message to the P-GW for each PDN connection.
9a. If necessary, the P-GW may perform an IP connectivity access network (IP-CAN) session modification procedure along with the PCRF.
9. When the P-GW receives the Modify Bearer Request Message from the new S-GW, it transmits a Modify Bearer Response message to the new S-GW as a response thereto.
10. The new S-GW updates its own bearer context. Accordingly, the new S-GW may route a bearer PDU to the P-GW when it receives the bearer PDU from an eNodeB.
   The new S-GW transmits a Create Session Response message to the new MME as a response to a Create Session Request.
11. The new MME transmits a Context Acknowledge message to the old MME/SGSN.
   When the MME selects the new S-GW, the MME delivers change indication information of the S-GW to the old MME/SGSN through a Context Acknowledge message. The change indication information of the S-GW indicates that the new S-GW has been selected.
12. The new MME transmits an Update Location Request message to the HSS.
   In this case, the new MME confirms whether it has the subscription data of the corresponding UE, and may transmit the Update Location Request message to the HSS if it does not have the subscription data of the corresponding UE.
13. The HSS transmits a Cancel Location message to the old MME/SGSN.
14. The old MME/SGSN transmits a Cancel Location Acknowledge message to the HSS as a response to the Cancel Location message.
15. When the old SGSN receives the Context Acknowledge message and the UE is connected through an lu interface, the old SGSN transmits an lu Release Command message to the RNC.
16. The RNC transmits an lu Release Complete message to the old SGSN as a response to the lu Release Command message.
17. The HSS transmits an Update Location Acknowledge message to the new MME as a response to an Update Location Request message.
   The Update Location Acknowledge message may include the subscription data of the corresponding UE.
18. When the S-GW change indication is received within the Context Acknowledgement message at step 11, the old MME/SGSN releases an MME or SGSN EPS bearer resource by transmitting a Delete Session Request message to the old S-GW.
19. The old S-GW transmits a Delete Session Response message to the old MME/SGSN as a response to the Delete Session Request message.
20. The new MME transmits a TAU Accept message to the UE. In this case, if the new MME has assigned a new globally unique temporary identity (GUTI) to the UE, the assigned GUTI may be included in the TAU Accept message.
   If the UE has included eDRX parameter(s) information in the TAU Request message and the MME determines to activate eDRX, the MME includes an eDRX parameter(s) IE in the TAU Accept message.
   If the TAU Accept message is received and ISR Activated indication is present in the TAU Accept message, the UE sets a TIN as a globally unique temporary identity (GUTI).
21. If the GUTI is included in the TAU Accept message, the UE transmits a TAU Complete message to the MME as a response to the TAU Accept message.

### Power Saving Mode

The Power Saving Mode (PSM) is a function to minimize power consumption of the UE by defining an interval in which one UE disables access stratum (AS) operations including paging reception and mobility management as one of 3GPP release-12 (rel-12) advanced MTC (enhancements for MTC) (MTCe)) features. That is, the UE that supports the PSM agrees or receives an active time and a periodic TAU timer (P-TAU) with or from the network during attach and tracking area update (TAU).

When receiving the Active Time value from the network, in the case where the UE is switched from ECM-CONNECTED to ECM-IDLE, the UE maintains the ECM-IDLE state to receive the paging during the corresponding Active Time. Then, when the Active Time expires, the UE enters the PSM and stops all Access Stratum (AS) operations.

In addition, the MME starts an active timer with the Active Time value every time the UE enters the ECM-IDLE mode. In addition, when the active timer expires, the MME deduces that the UE is unreachable.

That is, Active Time refers to a time when the UE supporting a state (for example, the power saving mode (PSM), etc.) using a power saving function maintains the ECM-IDLE (or RRC_IDLE) state.

When the periodic TAU timer expires, the UE enables the AS operation and performs the TAU again and the network stops an implicit detach timer of the corresponding UE. The UE may wake up at any time when a user wants for a mobile originated call (e.g., uplink data packet transfer), etc.

On the contrary, for a mobile terminated call (e.g., downlink data packet receiving), etc., the UE wakes up every P-TAU period to perform the TAU and performs a paging receiving operation for the active time received at that time and thereafter, enters the PSM again to sleep.

### Machine-Type Communication (MTC)

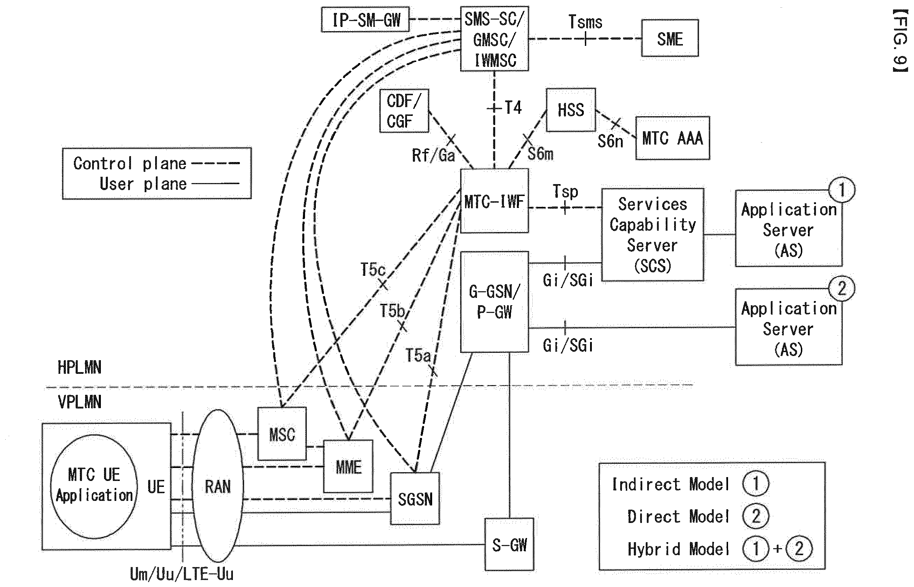

FIG. 9 is a diagram exemplifying machine-type communication (MTC) architecture in a wireless communication system to which the present invention can be applied.

An end-to-end application between the UE (or MTC UE) used for the MTC and an MTC application may adopt services provided in the 3GPP system and the optional services provided to an MTC server. The 3GPP system may provide transport and communication services (including 3GPP bearer services, IMS, and SMS) including various optimizations to facilitate the MTC.

FIG. 9 illustrates that the UE used for the MTC is connected to a 3GPP network (UTRAN, E-UTRAN, GERAN, I-WLAN, etc.) through an Um/Uu/LTE-Uu interface. The architecture of FIG. 9 includes various MTC models (Direct, Indirect, and Hybrid models).

First, entities illustrated in FIG. 9 will be described.

In FIG. 9, the application server is a server on the network where the MTC application is executed. Techniques for implementing various MTC applications described above may be applied to the MTC application server and a detailed description thereof will be omitted. Further, in FIG. 9, the MTC application server may access the MTC server through a reference point API, and a detailed description thereof will be omitted. Alternatively, the MTC application server may be collocated with the MTC server.

The MTC server (e.g., an SCS server in FIG. 9) is a server on the network that manages the MTC terminal and may communicate with the UE and PLMN nodes connected to the 3GPP network and used for the MTC.

An MTC-interworking function (MTC-IWF) may manage interworking between the MTC server and an operator core network and act as a proxy for the MTC operation. In order to support an MTC indirect or hybrid model, the MTC-IWF may relay or interpret a signaling protocol on a reference point Tsp to enable a specific function in the PLMN. The MTC-IWF performs a function of authenticating the MTC server before the MTC server establishes communication with the 3GPP network, a function of authenticating a control plane request from the MTC server, various functions related to a trigger instruction described later, etc.

A short Message Service-Service Center (SMS-SC)/Internet Protocol Short Message GateWay (IP-SM-GW) may manage transmission and reception of the short message service (SMS). The SMS-SC may be responsible for relaying, storing, and delivering short messages between a short message entity (SME) (an entity transmitting or receiving short messages) and the UE. The IP-SM-GW may take charge of protocol interoperability between a IP-based UE and the SMS-SC.

A charging data function (CDF)/charging gateway function (CGF) may perform charging-related operations.

The HLR/HSS may serve to store subscriber information (IMSI, etc.), routing information, configuration information, etc., and provide the subscriber information (IMSI, etc.), routing information, configuration information, etc., to the MTC-IWF.

The MSC/SGSN/MME may perform control functions including mobility management, authentication, resource allocation, etc., for network connection of the UE. The MSC/SGSN/MME may perform a function of receiving the trigger instruction from the MTC-IWF and processing the received trigger instruction in the form of the message to be provided to the MTC UE in association with the triggering described later.

The gateway GPRS support node (GGSN)/serving-gateway (S-GW) + packet date network-gateway (P-GW) may perform a gateway function of taking charge of connection between a core network and an external network.

In Table 2, main reference points in FIG. 9 are summarized.

**[Table 2]**

| Reference point | Description |
|---|---|
| Tsms | Reference point used for an entity outside the 3GPP system to communicate with the MTC UE via the SMS |
| Tsp | Reference point used for the entity outside the 3GPP system to |
| | communicate with the MTC-IWF in association with control plane signaling |
| T4 | Reference point used by the MTC-IWF to route device triggers to the SMS-SC of the HPLMN |
| T5a | Reference point between the MTC-IWF and a serving SGSN |
| T5b | Reference point between the MTC-IWF and a serving MME |
| T5c | Reference point between the MTC-IWF and a serving MSC |
| S6m | Reference point used by the MTC-IWF to inquire identification information (E.164 Mobile Station International Subscriber Directory Number (MSISDN) or IMSI mapped to an external identifier) of the UE and to collect UE accessibility and configuration information |

In Table 2, at least one of the reference points T5a, T5b, and T5c is referred to as T5.

Meanwhile, user plane communication with the MTC server in the case of the indirect and hybrid models and communication with the MTC application server in the case of the direct and hybrid models may be performed using the existing protocol through the reference points Gi and SGi.

Specific details related to the contents described in FIG. 9 may be incorporated into the present document by reference of 3GPP TS 23.682 document.

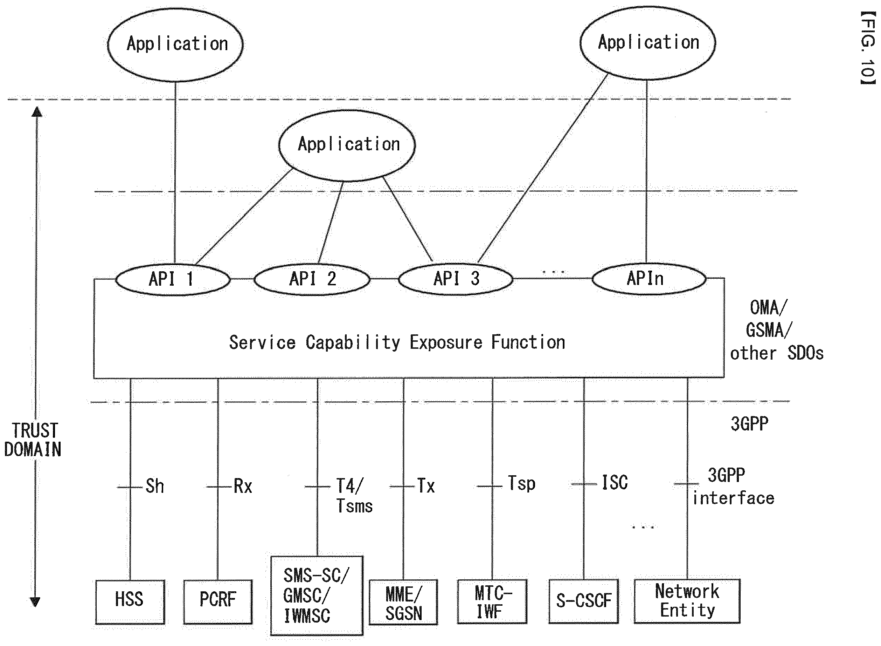

FIG. 10 exemplifies architecture for service capability exposure in a wireless communication system to which the present invention can be applied.

The architecture for the service capability exposure illustrated in FIG. 10 illustrates that the 3GPP network securely exposes services and capabilities thereof provided by the 3GPP network interface to an external third party service provider application.

A service capability exposure function (SCEF) is a core entity within the 3GPP architecture for the service capability exposure that provides a means for securely exposing the services and capabilities provided by 3GPP network interface. In other words, the SCEF is a key entity for providing service functions belonging to a trust domain operated by a mobile communication provider. The SCEF provides API interfaces to third party service providers and provides 3GPP service functions to third party service providers through connections with various entities of 3GPP. The SCEF may be provided by the SCS.

When a Tsp function may be exposed through the application program interface (API), the MTC-IWF may be co-located with the SCEF. A protocol (e.g., DIAMETER, RESTful APIs, XML over HTTP, etc.) is selected to specify a new 3GPP interface depending on multiple factors and herein, the multiple factors include facilitation of exposure of requested information, and need of a specific interface, but is not limited thereto.

### Emergency bearer service

Terms that may be used in the following description are defined as follows.
- Emergency bearer service: the emergency bearer service is provided to support an IMS emergency session (or call). When a network is configured to provide an emergency service, the emergency bearer service means functions provided by a serving network.
- Attached for emergency bearer services: If a UE has only a established PDN connection for emergency bearer services, the UE is attached for the emergency bearer services.

As described above, a UE having only a bearer(s) related to the emergency bearer services may be called an emergency attached UE (or an UE attached for emergency bearer services).
- Emergency EPS bearer context: means default EPS bearer context whose request type has been activated as "emergency" or dedicated EPS bearer context associated with default EPS bearer context.
- Non-emergency EPS bearer context: means EPS bearer context not emergency EPS bearer context.
- PDN connection for emergency bearer services: means a PDN connection in which the request type of default EPS bearer context or default PDP context has been set as "emergency."

The emergency bearer service may be provided to a normal attached UE (i.e., a UE whose PDN connection has been established through a normal Attach procedure) or an emergency attached UE (i.e., a UE whose PDN connection has been established through an emergency Attach procedure).

Furthermore, the emergency bearer service may be provided to UEs in the limited service state according to a local regulation. The UEs in the limited service state are defined in 3GPP TS 23.122. In the limited service state, the reception of emergency services does not require the subscription of a UE. The MME may accept or reject an emergency attach request for a UE in the limited service state based on a local regulation and an operator's policy.

In order to provide the emergency bearer services, MME Emergency Configuration Data applied to all of emergency bearer services established by the MME, when a UE makes a request, is configured in the MME. The MME Emergency Configuration Data may include an emergency access point name (APN) used to derive a PDN GW or may include a PDN GW statically configured for an emergency APN.

When the PDN GW is selected for IMS emergency service support, the PDN GW selection function (refer to 3GPP TS 23.401) for a common bearer service may be applied to the emergency APN or the MME directly selects the PDN GW from the MME Emergency Configuration Data.

In this case, the APN means a PDN identity (i.e., PDN ID) and means a text string for denoting or identifying a PDN. A P-GW to be used by a UE may be determined by an APN. Furthermore, a tunnel for enabling a UE to connect to a PDN may be defined by an APN. An APN for identifying a corresponding PDN for each PDN and one or more P-GWs associated with the corresponding PDN may be included.

The UE in the limited service state may initiate an Attach procedure while indicating that the corresponding Attach is for receiving emergency services.

Furthermore, a UE that has been attached for normal services, has an emergency bearer not established, and camps on a cell in the limited service state (e.g., for a reason of a limited tracking area (TA)) may initiate an Attach procedure while indicating that the corresponding Attach is for receiving emergency services.

That is, the UE may include an Attach Type parameter indicating whether Attach is normal Attach or emergency Attach in the ATTACH REQUEST message, and may transmit the ATTACH REQUEST message to the MME.

In general, a UE camping on a cell (i.e., a UE not in the limited service state) initiates a normal initial attach procedure when it is not yet attached to a network. Furthermore, the normal attached UE initiates a UE requested PDN Connectivity procedure in order to receive an emergency EPS bearer service.

A default and dedicated EPS bearer for a PDN connection associated with an emergency APN is dedicated for an IMS emergency session and is not permitted for traffic of any other type. Emergency bearer context is not changed into non-emergency bearer context and vice versa.

If an emergency PDN GW connection has been present, the UE does not request another emergency PDN connection. The MME rejects any additional PDN connectivity request.

A network that supports emergency services for a UE in the limited service state provides emergency bearer services to UEs based on a local regulation regardless of whether the UE can be authenticated, whether the UE has roamed, whether the UE has mobility limitations, and regardless of a validly subscribed UE.

A UE in the limited service state may determine whether a cell supports emergency services through the E-UTRAN based on a broadcast indicator within an access stratum (AS).

In general, a UE camping on a cell may be aware whether a corresponding PLMN supports an emergency bearer service through the E-UTRAN by receiving an emergency service support indicator from the MME during an Attach and TAU procedure.

When a periodic TAU update timer expires, an emergency attached UE does not initiate a periodic TAU procedure and enters an EMM release state (EMM-DEREGISTERED state).

In the case of the emergency attached UE, the MME drives a mobile reachable timer as a value similar to the periodic TAU timer of the UE. The MME may change the EMM state of the emergency attached UE into the EMM-DEREGISTERED state any time after the mobile reachable timer expires. The MME assigns a periodic TAU timer value to the emergency attached UE. The timer enables the emergency attached UE to maintain the emergency attached state after the UE has changed into the EMM-IDLE state. The reason for this is that the UE may be permitted to receive a next emergency service without a need to perform an emergency Attach procedure again.

Hereinafter, an Attach procedure and PDN Connectivity procedure for establishing PDC connectivity for emergency bearer services (i.e., bearer setup/activation to an emergency APN (PDN)) are described below.

FIG. 11 illustrates an Attach procedure and PDN Connectivity procedure in a wireless communication system to which the present invention may be applied.

The Attach procedure illustrated in FIG. 11(a) is a procedure used for Attach toward the EPC for a packet service within the EPS.

A UE initiates the Attach procedure by transmitting an ATTACH REQUEST message to the MME (S1101).

When the UE initiates an Attach procedure for a normal service, the UE indicates "EPS Attach" in an EPS Attach type information element (IE) within an ATTACH REQUEST message.

In contrast, when the UE initiates an Attach procedure for an emergency bearer service, the UE indicates "EPS emergency Attach" in the EPS Attach type information element (IE) within the ATTACH REQUEST message.

When the Attach request is accepted by a network, the MME transmits an ATTACH ACCEPT message to the UE as a response to the ATTACH REQUEST message (S1102).

If the Attach request has included a PDN CONNECTIVITY REQUEST message for requesting a PDN connection, when the MME accepts the Attach request, the MME transmits an ACTIVATE DEFAULT EPS BEARER CONTEXT REQUEST message to the UE along with the ATTACH ACCEPT message in order to activate a default EPS bearer.

If a service is not restricted by a local regulation, during the Attach procedure for an emergency bearer service, the MME does not check mobility and access restrictions, regional restrictions, and subscription restrictions when processing the ATTACH REQUEST message.

Furthermore, the network does not apply a subscribed APN based on congestion control during the Attach procedure for an emergency bearer service. That is, as described above, a PDN connection may be generated by an emergency APN.

If the MME does not support Attach for an emergency bearer service, the MME rejects any Attach request in which an Attach type has been set as "EPS emergency attach." That is, the MME may transmit an Attach Reject message to the UE as a response to the ATTACH REQUEST message.

An object of the UE-requested PDN connection procedure illustrated in FIG. 11(b) is for the UE to request the setup of a default EPS bearer from the PDN. The UE requests connectivity to the PDN by transmitting a PDN CONNECTIVITY REQUEST message to a network. When the request is accepted by the network, the procedure initiates the setup of default EPS bearer context.

If a PDN connection for emergency bearer services has already been established, the UE does not request additional PDN connection for the emergency bearer service from a network. Furthermore, the UE attached for the emergency bearer service does not request a PDN connection to any other PDN.

In order to request connectivity to the PDN, the UE transmits a PDN CONNECTIVITY REQUEST message to the MME (S1103).

In this case, when the UE establishes a new PDN connection to the PDN within the Attach procedure or stand-alone PDN connection procedure, the UE sets a request type within the PDN CONNECTIVITY REQUEST message as an "initial request."

In contrast, when the UE requests a new PDN connection for emergency bearer services, the UE sets a request type within the PDN CONNECTIVITY REQUEST message as "emergency."

Furthermore, in order to request a PDN connection for emergency bearer services, the UE does not include an APN in the PDN CONNECTIVITY REQUEST message.

When the PDN CONNECTIVITY REQUEST message is received, the MME checks whether requested connectivity with the PDN may be established.

Furthermore, the requested connectivity with the PDN may be accepted by the network. The MME initiates a default EPS bearer context activation procedure by transmitting an ACTIVATE DEFAULT EPS BEARER CONTEXT REQUEST message to the UE as a response to the PDN CONNECTIVITY REQUEST message (S1104).

If an APN is not included in the PDN CONNECTIVITY REQUEST message and a request type is "emergency", the MME uses an APN configured for an emergency bearer service or selects a PDN GW statically configured to an unauthenticated UE.

The default EPS bearer context activation procedure is a procedure for establishing default EPS bearer context between the UE and the EPC.

The MME may assign an EPS bearer identity (EBI) and include the assigned EBI in the default ACTIVATE DEFAULT EPS BEARER CONTEXT REQUEST message.

The UE transmits an ACTIVATE DEFAULT EPS BEARER CONTEXT ACCEPT message to the MME as a response to the ACTIVATE DEFAULT EPS BEARER CONTEXT REQUEST message, so the EPS bearer context is activated (S1105).

Meanwhile, if connectivity with the PDN requested by the UE is not accepted by the network, the MME may transmit a PDN CONNECTIVITY REJECT message to the UE.

As described above, when the Attach procedure or PDN connection procedure for the emergency bearer service is successfully completed, PDC connectivity for the emergency bearer service is established (i.e., bearer setup/activation emergency toward an APN (PDN)).

Hereinafter, a PDN disconnect procedure and EPS bearer context deactivation procedure for the release of a PDN connection for an emergency service are described.

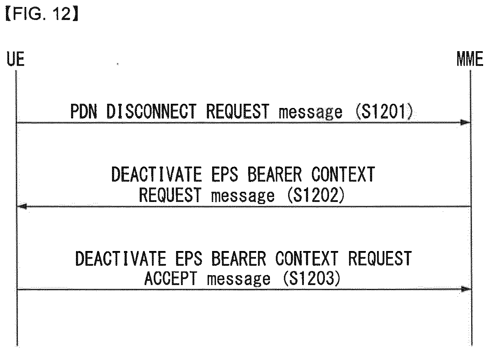

FIG. 12 illustrates a PDN disconnect procedure in a wireless communication system to which the present invention may be applied.

A UE-requested PDN disconnect procedure is a procedure for a UE to disconnect from one PDN.

In order to request PDN disconnection from the PDN, a UE transmits a PDN DISCONNECT REQUEST message to the MME (S1201).

In this case, the PDN DISCONNECT REQUEST message includes an EPS bearer identity (EBI) associated with the corresponding PDN.

When the PDN DISCONNECT REQUEST message is received and the PDN disconnection is accepted by a network, the MME initiates an EPS bearer context deactivation procedure by transmitting a DEACTIVATE EPS BEARER CONTEXT REQUEST message to the UE as a response to the PDN DISCONNECT REQUEST message (S1202).

In this case, the DEACTIVATE EPS BEARER CONTEXT REQUEST message includes the EPS bearer identity (EBI) of a default bearer associated with the PDN to be disconnected.

The EPS bearer context deactivation procedure is a procedure for disconnecting from the PDN by deactivating EPS bearer context or by deactivating the entire EPS bearer context for the PDN.

The EPS bearer context deactivation procedure may be triggered by the UE according to a UE-requested PDN Disconnect procedure, such as FIG. 12.

Alternatively, the EPS bearer context deactivation procedure may be initiated by a network.

If detach for a UE having a bearer for an emergency service is requested by the HSS, the MME may transmit a DEACTIVATE EPS BEARER CONTEXT REQUEST message to the UE with respect to all of bearers not allocated for an emergency service.

When the UE receives the DEACTIVATE EPS BEARER CONTEXT REQUEST message, it deletes EPS bearer context identified by the EPS bearer identity (EBI). After the identified EPS bearer context is deactivated, the UE transmits a DEACTIVATE EPS BEARER CONTEXT ACCEPT message to the MME as a response to the DEACTIVATE EPS BEARER CONTEXT REQUEST message (S1203).

When the procedure is completed, the entire EPS bearer context including default EPS bearer context toward the corresponding PDN is released.

Meanwhile, if Disconnect from the UE-requested PDN cannot be accepted by the network, the MME may transmit a PDN DISCONNECT REJECT message to the

UE.

As described above, when a UE-requested PDN disconnect procedure or an EPS bearer context deactivation procedure is successfully completed with respect to a PDN connection for emergency bearer services, the PDN connection for the emergency bearer service is released (i.e., a bearer associated with the PDN connection for the emergency bearer service is deactivated).

### Extended idle mode DRX (eDRX)

The 3GPP LTE/LTE-A system uses a discontinuous reception (DRX) scheme of a UE in order to minimize power of the UE.

DRX defined in the 3GPP LTE/LTE-A system may be used in both the IDLE mode and RRC_IDLE state of a UE.

A UE may perform the monitoring of a PDCCH based on an RNTI (e.g., a C-RNTI, an SI-RNTI or a P-RNTI), that is, the unique identity of the UE.

The monitoring of a PDCCH may be controlled by a DRX operation, and an eNB transmits a parameter regarding DRX to a UE through an RRC message. If the DRX parameter has been configured in the UE in the RRC Connected state, the UE performs discontinuous monitoring for the PDCCH based on a DRX operation. In contrast, if the DRX parameter has not been configured, the UE performs the continuous monitoring of the PDCCH.

Furthermore, as described above, a UE that receives a paging message may perform DRX in order to reduce power consumption.

To this end, a network configures a plurality of paging occasions every time interval called a paging cycle. A specific UE receives a paging message only at a specific paging occasion, and does not receive a paging channel at an occasion other than the specific paging occasion. Furthermore, one paging occasion may correspond to one TTI.

Extended idle mode DRX (eDRX) is a function for minimizing power consumption of a UE by increasing the existing maximum of 2.56s paging DRX cycle from several minutes to a maximum of several tens of minutes. eDRX may be applied to an Idle mode and Connected node. Extended idle mode DRX applied to the Connected mode is relatively shorter than DRX applied to the Idle mode, such as a maximum of 10.24s.

In the case of a UE not supporting the eDRX mode, a state unreachable to the UE may mean a state unreachable by paging (i.e., a DRX duration in which the UE does not monitor a paging channel).

In contrast, in the case of a UE supporting the eDRX mode, a state reachable to the UE may mean an ECM-CONNECTED mode and/or a state immediately reachable to the UE by paging (i.e., the duration in which the UE monitors a paging channel).

In other words, eDRX may be determined to be not temporarily reachable even in the idle duration because it has a DRX duration relatively longer than that of a common DRX mode. That is, if common DRX (2.56 seconds) is supported, data may be delivered after a maximum of 2.56 seconds. If eDRX (e.g., 10 minutes) is applied, instant data delivery is impossible because maximum delay is 10 minutes. It may be considered to be substantially unreachable.

The UE and a core network may negotiate the use of eDRX. When the UE determines a request for eDRX, the UE includes an eDRX parameter information element in an Attach request and/or a TAU Request message. Furthermore, the UE may include a UE-specific DRX parameter for regular idle mode DRX.

The MME determines whether to accept or reject the UE request for activating eDRX.

When the MME accepts eDRX, the MME may provide a value of an eDRX parameter different from a value requested by the UE based on an operator policy. When the MME accepts eDRX, the UE applies eDRX based on the received eDRX parameter. If the UE does not receive an eDRX parameter information element within a related Accept message because an SGSN/MME rejects the request of the UE or an SGSN/MME not supporting eDRX has received the request, the UE applies the regular idle mode DRX.

If the UE wants to still use eDRX, it needs to include the eDRX parameter information element in each TAU message. When the UE moves from an MME to an MME, from an MME to an SGSN, or from an SGSN to an MME, the eDRX parameter is not transmitted from an old core node (CN) to a new core node (CN) as part of mobility management (MM) context information.

The UE and the network may negotiate the use of eDRX through non-access stratum (NAS) signaling in order to reduce power consumption of the UE. Mobile-terminating data and/or a network-originated procedure is available within specific delay dependent on a DRX cycle value.

An application that wants the use of eDRX needs to take into consideration specific control of a mobile-terminating service or data delivery. In particular, a corresponding application needs to take into consideration delay tolerance for mobile-terminating data.

The network stage application may transmit mobile-terminating data, an SMS or a device trigger, and needs to check whether eDRX can be properly prepared.

In order to negotiate the use of eDRX, the UE requests an eDRX parameter during an Attach procedure and an RAU/TAU procedure. The SGSN/MME may reject or accept the UE request for activating eDRX.

When the SGSN/MME accepts eDRX, the SGSN/MME may provide a value different from the eDRX parameter requested by the UE based on an operator policy. When the SGSN/MME accepts the use of eDRX, the UE applies eDRX based on the received eDRX parameter. The UE applies regular DRX if the UE does not receive an eDRX parameter information element within a related Accept message because the SGSN/MME rejects the request of the UE or an SGSN/MME not supporting eDRX has received the request.

When the UE requests the activation of both PSM (active time and P-TAU timer request) and eDRX (along with a specific eDRX cycle value) through NAS, the SGSN/MME determines one of the followings.
1) Only the PSM is activated. That is, the request of eDRX is not accepted.
2) Only eDRX is activated. That is, the request of an active time is not accepted.
3) Both the PSM (i.e., providing an active time) and eDRX (i.e., providing an eDRX parameter) are activated.

The determination from among the three operations, the active time provided to the UE, and a P-TAU timer and/or an eDRX cycle value are dependent on an implementation based on a local configuration and other available information within the SGSN/MME. The selected method is used until a next Attach or RAU/TAU procedure is initiated (when a new method is determined). When both eDRX and PSM are activated, the eDRX cycle needs to be set so that it has multiple paging occasions while the active timer operates.

If a PSM active time provided by the UE is greater than an eDRX cycle value provided by the UE, the SGSN/MME may activate both PSM and eDRX. Accordingly, the UE can minimize power consumption during the active time (e.g., if the active time is slightly longer than a normal active time of several minutes).

When eDRX is activated, the network may control mobile-terminating data using high latency communication characteristics. The network may apply a technology for controlling a mobile-terminating SMS.

The UE may request the use of the eDRX cycle by including the eDRX parameter within the Attach request or the TAU Request.

When the network accepts the Attach request or TAU Request, it accepts the request for the use of the eDRX cycle by providing the eDRX parameter. The UE repeats the request for the use of the eDRX cycle upon each TAU request. The UE may use the eDRX cycle only when the network accepts the request for the use of the eDRX cycle during the finally (i.e., old) successful Attach or TAU procedure.

The eDRX parameter information element (IE) is used to indicate that the UE wants eDRX to be used, and is also used to indicate a paging time window length value and an eDRX cycle value to be used for the network for eDRX.

The eDRX parameter includes an eDRX parameter information-element-identifier (IEI), the length of the eDRX parameter, a paging time window, and an eDRX value. An eDRX cycle length duration value and/or an eDRX cycle parameter T_eDRX are derived from the eDRX value.

A paging hyper-frame (PH) is configured in the UE for each eDRX cycle (T_eDRX,H) (i.e., 5.12, 10.24,... , 2621.44 seconds) expressed in a hyper-frame. The PH means a specific set of hyper-system frame number (H-SFN) values. The PH may be calculated using an extended idle mode DRX cycle and a UE-specific identity (e.g., IMSI). An H-SFN frame structure is defined at the greatest value of an SFN used for regular idle mode DRX. That is, one hyper frame consists of 1024 radio frames (i.e., 10.24 seconds). Accordingly, when the SFN is wrapped around, the H-SFN is increased by 1.

Furthermore, a paging time window (PTW) (or paging window (PW)) is configured from PW_start to PW_end within the PH. The MME/SGSN assigns a PTW length, and provides the UE with a PTW length value along with an extended idle mode DRX cycle length during the Attach and/or TAU procedure.

Furthermore, paging is monitored in a paging occasion (PO) (i.e., when the eDRX cycle is a 512-radio frame) or a regular DRX cycle calculated based on the eDRX cycle of the UE within the configured paging window and a paging occasion (PO) (i.e., if the eDRX cycle is not a 512-radio frame) calculated based on a default paging cycle.

### Method of supporting eDRX activation of UE whose emergency bearer service has been activated

Today it has been defined that a UE cannot activate eDRX when the UE receives emergency bearer services.

More specifically, it has been defined that when the UE has a bearer(s) for the emergency bearer services, the UE and an MME comply with regular DRX and are prevented from using eDRX.

Furthermore, as described above, the UE may request the use of eDRX during the Attach procedure or TAU procedure by including the eDRX parameter IE. In this case, it has been defined that the UE cannot request the use of eDRX during an Attach procedure for emergency bearer services or during the TAU procedure of a UE attached for emergency bearer services (i.e., when the UE has a PDN connection for emergency bearer services).

There is no problem if a PDN connection for emergency bearer services has been established in the UE while the UE does not use eDRX (i.e., while the UE uses regular DRX). In this case, if a PDN connection for emergency bearer services is established while the UE already uses eDRX, the operation of the UE regarding whether the use of eDRX activated in an old TAU/Attach procedure is possible has not been clearly defined.

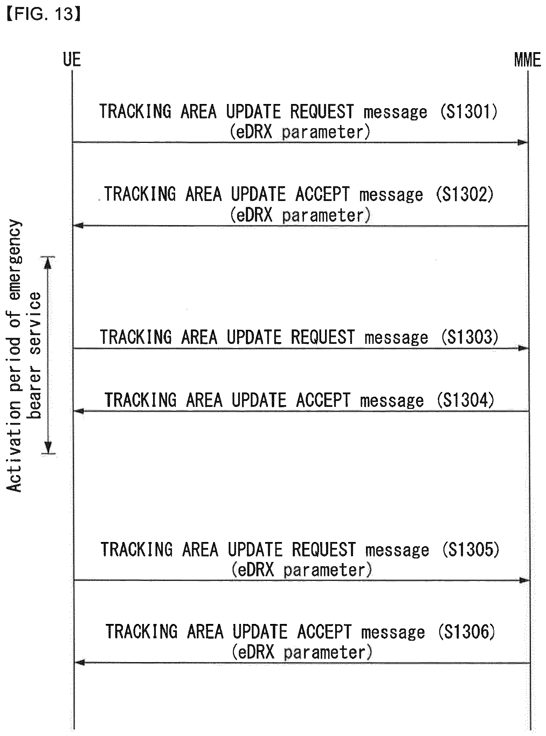

FIG. 13 is a diagram for illustrating an eDRX activation-related operation within an emergency bearer service activation period in a wireless communication system to which the present invention may be applied.

Referring to FIG. 13, when the triggering condition of a tracking area update (TAU) procedure is satisfied, a UE initiates the TAU procedure by transmitting a TRACKING AREA UPDATE REQUEST message to an MME (S1301).

In this case, the triggering condition of the tracking area update (TAU) procedure includes the time when a periodic TAU timer expires, the time when the entry of the UE into a tracking area not included in a tracking area list previously registered with the MME is detected, the time when the UE needs to request the use of eDRX or to stop the use of eDRX, or the time when another eDRX parameter is required because an eDRX use condition is changed.

In this case, if the UE supports eDRX and requests the use of eDRX, the UE includes an eDRX parameter information element (IE) in the TRACKING AREA UPDATE REQUEST message.

When the tracking area request is accepted by a network, the MME transmits a TRACKING AREA UPDATE ACCEPT message to the UE (S1302).

Furthermore, if the eDRX parameter is included in the TRACKING AREA UPDATE REQUEST message, the MME determines whether to accept or reject the UE request for activating eDRX.

If the eDRX parameter is included in the TRACKING AREA UPDATE REQUEST message and the MME supports eDRX and accepts the use of eDRX, the MME includes the eDRX parameter IE in the TRACKING AREA UPDATE ACCEPT message.

In this case, when the MME accepts eDRX, the MME may provide a value of the eDRX parameter different from a value requested by the UE.

As described above, when the MME accepts eDRX (i.e., if the eDRX parameter IE is included in the TRACKING AREA UPDATE ACCEPT message), the UE uses eDRX based on the received eDRX parameter. That is, when the UE enters the idle mode, it uses eDRX based on the eDRX parameter. Furthermore, the MME also uses eDRX based on the eDRX parameter provided to the UE.

Thereafter, a case where the UE has established a PDN connection for emergency bearer services (or bearers) through a procedure, such as the example of FIG. 11, is assumed.

As described above, it has now been defined that when the UE now has a PDN connection for emergency bearer services, the UE and the MME comply with regular DRX and are prevented from using eDRX. Accordingly, as in FIG. 13, when a PDN connection for emergency bearer services is established, the UE does not use eDRX after the corresponding PDN connection was established.

In other words, if eDRX is activated before a PDN connection for emergency bearer services is established, when the UE performs the emergency bearer services, it does not apply eDRX, but applies normal/regular DRX (e.g., a maximum DRX value of 2.56 seconds), so a mobile-terminated emergency bearer service is successfully applied. That is, the UE and the MME locally deactivate eDRX.

The triggering condition of the tracking area update (TAU) procedure may be satisfied within the activation period of emergency bearer services (i.e., the duration until the PDN connection for emergency bearer services is released after it was established). In this case, the UE initiates a TAU procedure by transmitting a TRACKING AREA UPDATE REQUEST message to the MME (S1303).

If the UE performs the TAU procedure again because the triggering condition of the TAU procedure is satisfied while the UE uses eDRX by receiving an eDRX parameter from the MME, when the UE wants to still use eDRX, the UE needs to include an eDRX parameter IE in the TRACKING AREA UPDATE REQUEST message and to transmit the TRACKING AREA UPDATE REQUEST message to the MME.

In this case, as described above, it has now been defined that a UE is not allowed to request the use of eDRX during a TAU procedure if the UE has a PDN connection for emergency bearer services. Accordingly, as in FIG. 13, the UE cannot include the eDRX parameter in the TRACKING AREA UPDATE REQUEST message within the activation period of emergency bearer services.

When the tracking area request is accepted by a network, the MME transmits a TRACKING AREA UPDATE ACCEPT message to the UE (S1304).

Furthermore, the MME does not determine whether to activate and accept eDRX because the eDRX parameter is not included in the TRACKING AREA UPDATE REQUEST message.

The reason why it has been defined that eDRX is not applied within the activation period of emergency bearer services and an eDRX parameter should not be requested during a TAU procedure triggered within the activation period of emergency bearer services is that while a PDN connection for emergency bearer services is maintained, if a UE uses eDRX, the transmission of MT data is inevitably delayed and thus the application of eDRX is not suitable for a situation in which the provision of an emergency service is requested.

Accordingly, in a conventional technology, when a UE transmits an eDRX parameter to an MME and the MME accepts the use of eDRX and transmits the eDRX parameter to the UE, it is considered that the corresponding UE directly (i.e., without a separate condition) applies the eDRX mode. Therefore, it has now been defined that a UE should not request the use of eDRX within the activation period of emergency bearer services.

Thereafter, a case where a PDN connection for emergency bearer services (or bearers) for the UE has been released through a procedure, such as the example of FIG. 12, is assumed.

As described above, when an emergency bearer service is performed, the UE and the MME do not apply eDRX and apply normal/regular DRX. That is, eDRX is deactivated.

Furthermore, since the UE has not included the eDRX parameter in the TRACKING AREA UPDATE REQUEST message at step S1303, eDRX for the corresponding UE is deactivated regardless of the activation period of emergency bearer services.

Accordingly, if the UE wants the use of eDRX after a PDN connection for emergency bearer services is released (because this corresponds to the triggering condition of a TAU procedure), the UE initiates the TAU procedure by transmitting a TRACKING AREA UPDATE REQUEST message, including the eDRX parameter IE, to the MME in order to request the use of eDRX (S1305).

When the tracking area request is accepted by the network, the MME transmits a TRACKING AREA UPDATE ACCEPT message to the UE (S1306).

As described above, if the eDRX parameter has been included in the TRACKING AREA UPDATE REQUEST message, the MME determines whether to accept or reject the UE request for activating eDRX.

If the eDRX parameter is included in the TRACKING AREA UPDATE REQUEST message and the MME supports eDRX and accepts the use of eDRX, the MME includes the eDRX parameter IE in the TRACKING AREA UPDATE ACCEPT message.

In this case, when the MME accepts eDRX, the MME may provide a value of the eDRX parameter different from a value requested by the UE.

As described above, when the MME accepts eDRX (i.e., if the eDRX parameter IE is included in the TRACKING AREA UPDATE ACCEPT message), the UE applies eDRX based on the received eDRX parameter. That is, when the UE enters the idle mode, it applies eDRX based on the eDRX parameter.

It may be preferred that the UE does not apply eDRX within the activation period of emergency bearer services because the transmission of MT data is inevitably delayed within the activation period of emergency bearer services, as in the example of FIG. 13.

In this case, although eDRX has been already activated before a PDN connection for emergency bearer services is established, when the emergency bearer services are subsequently performed, the UE and the MME do not apply eDRX and apply normal/regular DRX. That is, there is a problem in that the UE and the MME deactivate eDRX.

Furthermore, although the UE initiates the TAU procedure because the TAU triggering condition is satisfied within the activation period of emergency bearer services, in a conventional technology, it has been defined that the UE should not request eDRX. Accordingly, there is a problem in that eDRX for the corresponding UE is deactivated regardless of whether the UE continues to request the use of eDRX.

As a result, when the activation period of emergency bearer services is terminated (i.e., when a PDN connection for emergency bearer services is released), the UE that wants the use of eDRX inevitably has to request the use of eDRX by performing the TAU procedure again as in steps S1305 and S1306. Accordingly, signaling overhead between the UE and the network is increased.

In order to solve such a problem, the present invention proposes operations of a UE and network related to eDRX activation when the UE already has a PDN connection for emergency bearer services while eDRX is already activated.

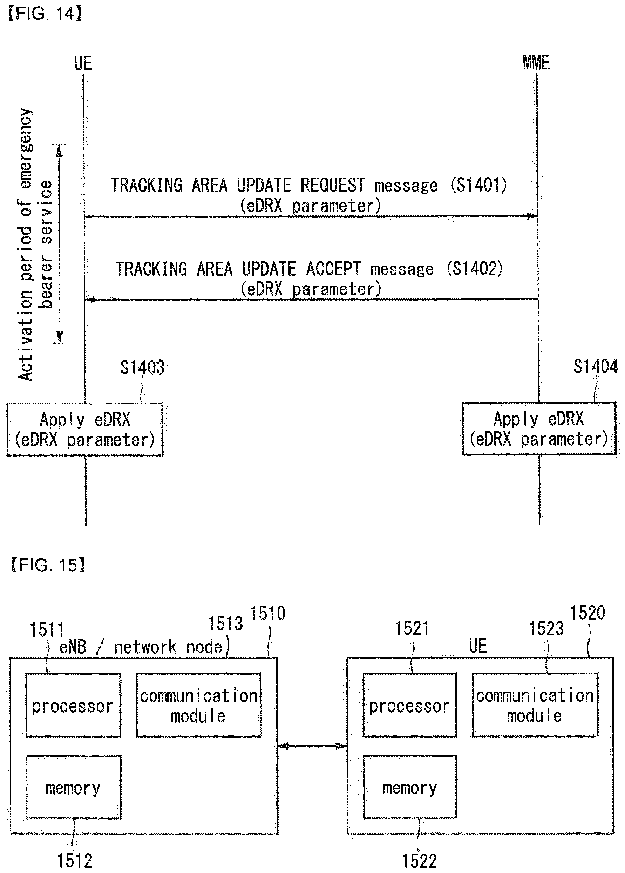

FIG. 14 is a diagram illustrating a method for supporting eDRX activation according to an embodiment of the present invention.

In FIG. 14, it is assumed that a PDN connection for emergency bearer services (or bearers) for a UE has been established through a procedure, such as the example of FIG. 11.

In accordance with an embodiment of the present invention, when the UE has a PDN connection for emergency bearer services (or bearers), the UE and a network may negotiate an eDRX parameter during a TAU procedure.

In other words, when the UE has a PDN connection for emergency bearer services (or bearers), the UE may still request eDRX although the emergency bearer services are in progress.

Referring to FIG. 14, when the UE has a PDN connection for emergency bearer services (or bearers), if the triggering condition of a TAU procedure is satisfied, the UE initiates the TAU procedure by transmitting a TRACKING AREA UPDATE REQUEST message to the MME (S1401).

In this case, the triggering condition of the tracking area update (TAU) procedure may include the time when a periodic TAU timer expires, the time when the entry of the UE into a tracking area not included in a tracking area list previously registered with the MME is detected, the time when the UE needs to request the use of eDRX or to stop the use of eDRX, or the time when another eDRX parameter is required because an eDRX use condition is changed.

In this case, if the UE supports eDRX and requests the use of eDRX, the UE may include an eDRX parameter IE in the TRACKING AREA UPDATE REQUEST message.

Although the UE receives an eDRX parameter from a network through a previous TAU/Attach procedure and uses eDRX, when the UE wants to still use eDRX, the UE may include an eDRX parameter in the TRACKING AREA UPDATE REQUEST message of each TAU procedure or the ATTACH REQUEST message of each Attach procedure. That is, such an operation may be performed regardless of whether the UE receives an emergency bearer service.

In mobility from an MME to an MME, from an MME to an SGSN or from an SGSN to an MME, an eDRX parameter is not transmitted as part of mobility management (MM) context information from an old core network (CN) node to a new CN node.

When the tracking area request is accepted by the network, the MME transmits a TRACKING AREA UPDATE ACCEPT message to the UE (S1402).

Furthermore, if the eDRX parameter is included in the TRACKING AREA UPDATE REQUEST message, the MME determines whether to accept or reject the UE request for activating eDRX.

If the eDRX parameter is included in the TRACKING AREA UPDATE REQUEST message and the MME supports eDRX and accepts the use of eDRX, the MME includes the eDRX parameter IE in the TRACKING AREA UPDATE ACCEPT message.

In this case, when the MME accepts eDRX, the MME may provide a value of the eDRX parameter different from a value requested by the UE.

As in steps S1401 and S1402, the eDRX parameter may be negotiated between the UE and the network (e.g., the MME) while the UE has a bearer (or PDN connection) for an emergency bearer service.

In this case, although the eDRX parameter is negotiated during the TAU procedure as described above, the UE and the MME do not apply eDRX while the UE has a PDN connection for emergency bearer services (or bearers).

In other words, the UE may use eDRX only when the UE does not have a PDN connection for emergency bearer services if the network has provided the eDRX parameter IE during the last Attach procedure or the last TAU procedure.

It is hereinafter assumed that a PDN connection for emergency bearer services (or bearers) for the UE has been released through a procedure, such as the example of FIG. 12.

If the network has provided the eDRX parameter IE during the last Attach procedure or the last TAU procedure, the UE and the network initiate eDRX when the PDN disconnect procedure of a PDN connection for emergency bearer services or the EPS bearer context deactivation procedure of EPS bearer context for an emergency is successfully completed (S1403, S1404).

That is, when the bearer (or PDN connection) for an emergency bearer service is released, the UE and the network (e.g., the MME) may reuse an negotiated eDRX parameter within the last TAU/Attach procedure.

In this case, as in the example of FIG. 14, if the TAU procedure is triggered within the duration in which an emergency bearer service has been activated and the eDRX parameter has been negotiated within the TAU procedure, after the emergency bearer service is terminated, the UE and the network may use eDRX based on the eDRX parameter negotiated in the TAU procedure (i.e., steps S1401 and S1402) within the duration in which an emergency bearer service has been activated. To this end, the UE and the MME do not use eDRX the negotiated eDRX parameter within the duration in which the emergency bearer service has been activated, but may have stored the negotiated eDRX parameter.

If the TAU procedure is not triggered within the duration in which the emergency bearer service has been activated unlike in FIG. 14, the UE and the network may use eDRX based on an eDRX parameter negotiated in the last TAU procedure before an emergency bearer service is activated. To this end, the UE and the MME use normal DRX within the duration in which the emergency bearer service has been activated, but may have stored a previously negotiated eDRX parameter.

As a result, when the emergency bearer service is released, the UE and the MME may use eDRX based on the eDRX parameter negotiated in an old (i.e., the last) Attach procedure or an old (i.e., the last) TAU procedure.

As described above, if the UE and the network do not negotiate the eDRX parameter within the Attach procedure or the TAU procedure, eDRX is released. Accordingly, when the TAU procedure is triggered while the UE has a PDN connection for emergency bearer services, if the UE and the network do not negotiate the eDRX parameter through the corresponding TAU procedure, eDRX is released.

In this case, if the UE wants the use of eDRX after the PDN connection for emergency bearer services is released, as in FIG. 13, the UE has to request the use of eDRX from the network through a separate Attach procedure or TAU procedure and to have the use of eDRX accepted by the network. That is, signaling overhead may be increased because an operation of negotiating an eDRX parameter between the UE and the network through a separate Attach procedure or TAU procedure is performed.

In contrast, in the present invention, although a TAU procedure is triggered while the UE has a PDN connection for emergency bearer services, the UE and the network can negotiate an eDRX parameter within the corresponding TAU procedure (although eDRX is not applied). Accordingly, signaling overhead can be reduced because the UE does not need to perform a separate TAU procedure in order to request the use of eDRX if the UE wants to use eDRX after a PDN connection for emergency bearer services is released.

### Overview of devices to which the present invention can be applied

FIG. 15 illustrates a block diagram of a communication device according to one embodiment of the present invention.

With reference to FIG. 15, a wireless communication system comprises a network node 1510 and a plurality of UEs 1520.

A network node 1510 comprises a processor 1511, memory 1512, and communication module 1513. The processor 1511 implements proposed functions, processes and/or methods proposed through FIG. 1 to FIG. 14. The processor 1511 can implement layers of wired/wireless interface protocol. The memory 1512, being connected to the processor 1511, stores various types of information for driving the processor 1511. The communication module 1513, being connected to the processor 1511, transmits and/or receives wired/wireless signals. Examples of the network node 1510 include an eNB, MME, HSS, SGW, PGW, application server and so on. In particular, in case the network node 1510 is an eNB, the communication module 1513 can include a Radio Frequency (RF) unit for transmitting/receiving a radio signal.

The UE 1520 comprises a processor 1521, memory 1522, and communication module (or RF unit) 1523. The processor 1521 implements proposed functions, processes and/or methods proposed through FIG. 1 to FIG. 14. The processor 1521 can implement layers of wired/wireless interface protocol. The memory 1522, being connected to the processor 1521, stores various types of information for driving the processor 1521. The communication module 1523, being connected to the processor 1521, transmits and/or receives wired/wireless signals.

The memory 1512, 1522 can be installed inside or outside the processor 1511, 1521 and can be connected to the processor 1511, 1521 through various well-known means. Also, the network node 1510 (in the case of an eNB) and/or the UE 1520 can have a single antenna or multiple antennas.

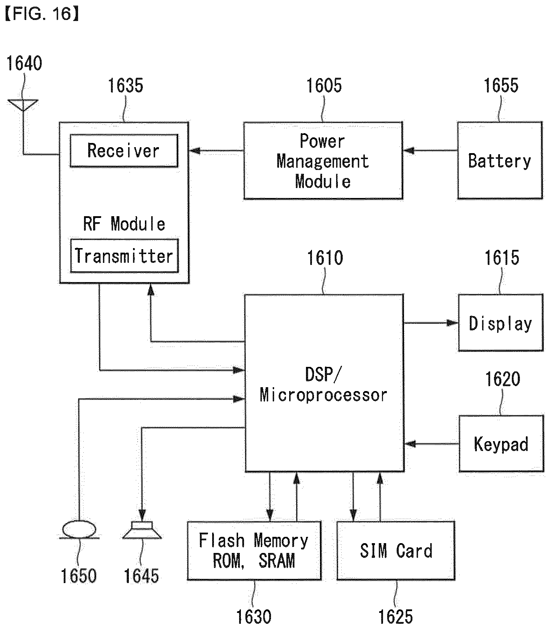

FIG. 16 illustrates a block diagram of a wireless communication apparatus according to an embodiment of the present invention.

Particularly, in FIG. 16, the UE described above FIG. 15 will be exemplified in more detail.

Referring to FIG. 16, the UE includes a processor (or digital signal processor) 1610, RF module (RF unit) 1635, power management module 1605, antenna 1640, battery 1655, display 1615, keypad 1620, memory 1630, Subscriber Identification Module (SIM) card 1625 (which may be optional), speaker 1645 and microphone 1650. The UE may include a single antenna or multiple antennas.

The processor 1610 may be configured to implement the functions, procedures and/or methods proposed by the present invention as described in FIG. 1-13. Layers of a wireless interface protocol may be implemented by the processor 1610.

The memory 1630 is connected to the processor 1610 and stores information related to operations of the processor 1610. The memory 1630 may be located inside or outside the processor 1610 and may be connected to the processors 1610 through various well-known means.

A user enters instructional information, such as a telephone number, for example, by pushing the buttons of a keypad 1620 or by voice activation using the microphone 1650. The microprocessor 1610 receives and processes the instructional information to perform the appropriate function, such as to dial the telephone number. Operational data may be retrieved from the SIM card 1625 or the memory module 1630 to perform the function. Furthermore, the processor 1610 may display the instructional and operational information on the display 1615 for the user's reference and convenience.

The RF module 1635 is connected to the processor 1610, transmits and/or receives an RF signal. The processor 1610 issues instructional information to the RF module 1635, to initiate communication, for example, transmits radio signals comprising voice communication data. The RF module 1635 comprises a receiver and a transmitter to receive and transmit radio signals. An antenna 1640 facilitates the transmission and reception of radio signals. Upon receiving radio signals, the RF module 1635 may forward and convert the signals to baseband frequency for processing by the processor 1610. The processed signals would be transformed into audible or readable information outputted via the speaker 1645.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment. Moreover, it will be apparent that some claims referring to specific claims may be combined with another claims referring to the other claims other than the specific claims to constitute the embodiment or add new claims by means of amendment after the application is filed.

The embodiments of the present invention may be achieved by various means, for example, hardware, firmware, software, or a combination thereof. In a hardware configuration, the methods according to the embodiments of the present invention may be achieved by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, microcontrollers, microprocessors, etc.

In a firmware or software configuration, the embodiments of the present invention may be implemented in the form of a module, a procedure, a function, etc. Software code may be stored in a memory unit and executed by a processor. The memory unit may be located at the interior or exterior of the processor and may transmit data to and receive data from the processor via various known means.

### [Industrial Applicability]

An example of the present invention is applied to a 3GPP LTE/LTE-A system is primarily described, but can be applied to various wireless communication systems in addition to the 3GPP LTE/LTE-A system.

## Claims

1. A method for supporting extended idle mode discontinuous reception, eDRX, activation in a wireless communication system, the method comprising:
transmitting, by a user equipment, a tracking area update, TAU, request message to a mobility management entity, MME, when a triggering condition of a TAU procedure is satisfied; and
receiving, by the user equipment, a TAU accept message from the MME in response to the TAU request message,
**characterized by**
resuming, by the user equipment, eDRX, based on i) a packet data network, PDN, connection for an emergency bearer service being released and ii) an eDRX parameter having provided by the MME during the last TAU procedure,
wherein based on the user equipment having the PDN connection for an emergency bearer service, i) the eDRX parameter is negotiated between the user equipment and the MME during the TAU procedure and ii) the eDRX is not used by the user equipment.

2. The method of claim 1, wherein when the user equipment requests the use of eDRX, if the user equipment has included a first eDRX parameter in the TAU request message and the MME accepts the eDRX use of the user equipment, a second eDRX parameter is included in the TAU accept message and the eDRX parameter is negotiated.

3. The method of claim 1, wherein:
when the user equipment transmits an attach request message indicative of emergency attach in an evolved packet system, EPS , attach type information element to the MME, an attach procedure is initiated, and
when the attach procedure is successfully completed, the PDN connection for the emergency bearer service is established.

4. The method of claim 1, wherein:
when the user equipment transmits a PDN connectivity request message having a request type set as an emergency to the MME, a PDN connectivity procedure is initiated, and
when the PDN connectivity procedure is successfully completed, the PDN connection for the emergency bearer service is established.

5. The method of claim 1, wherein:
when the user equipment transmits a PDN disconnect request message to the MME in order to request a release of the PDN connection for the emergency bearer service, a PDN disconnect procedure is initiated, and
when the PDN disconnect procedure is successfully completed, the PDN connection for the emergency bearer service is released.

6. The method of claim 1, wherein:
when the MME transmits a deactivate EPS bearer context request message to the user equipment in order to deactivate a bearer associated with the PDN connection for the emergency bearer service, an EPS bearer context deactivation procedure is initiated, and
when the EPS bearer context deactivation procedure is successfully completed, the PDN connection for the emergency bearer service is released.

7. A method for supporting extended idle mode discontinuous reception, eDRX, activation in a wireless communication system, the method comprising:
receiving, by a mobility management entity, MME, a tracking area update, TAU, request message from a user equipment; and
transmitting, by the MME, a TAU accept message to the user equipment in response to the TAU request message,
**characterized in that** based on i) a packet data network, PDN, connection for an emergency bearer service being released and ii) an eDRX parameter having provided by the MME to the user equipment during the last TAU procedure, the eDRX use of the user equipment is resumed, and
wherein based on the user equipment having the PDN connection for an emergency bearer service, i) the eDRX parameter is negotiated between the user equipment and the MME during the TAU procedure and ii) the eDRX is not used by the user equipment.

8. The method of claim 7, wherein when the user equipment requests the use of eDRX, if the user equipment has included a first eDRX parameter in the TAU request message and the MME accepts the eDRX use of the user equipment, a second eDRX parameter is included in the TAU accept message and the eDRX parameter is negotiated.

9. A user equipment, UE (1520), for supporting extended idle mode discontinuous reception, eDRX, activation, in a wireless communication system, the UE (1520) comprising:
a transceiver (1523);
at least one processor (1521); and
at least one computer memory (1522) operable connectable to the at least one processor (1521) and storing instructions that, when executed by the at least one processor (1521), perform operations comprising:
transmitting, via the transceiver (1523), a tracking area update, TAU, request message to a mobility management entity, MME (1510), when a triggering condition of a tracking area update procedure is satisfied; and
receiving, via the transceiver (1523), a TAU accept message from the MME (1510) in response to the TAU request message,
**characterized in that** when executed by the at least one processor (1521), perform operations comprising:
resuming, eDRX, based on i) a packet data network, PDN, connection for an emergency bearer service being released and ii) an eDRX parameter having provided by the MME (1510) during the last TAU procedure,
wherein based on the UE (1520) having the PDN connection for an emergency bearer service, i) the eDRX parameter is negotiated between the UE (1520) and the MME (1510) during the TAU procedure and ii) the eDRX is not used by the UE (1520).

10. The UE (1520) of claim 9, wherein when the UE (1520) requests the use of eDRX, if the UE (1520) has included a first eDRX parameter in the TAU request message and the MME (1510) accepts the eDRX use of the UE (1520), a second eDRX parameter is included in the TAU accept message and the eDRX parameter is negotiated.

11. The UE (1520) of claim 9, wherein:
when the UE (1520) transmits an attach request message indicative of emergency attach in an evolved packet system, EPS, attach type information element to the MME (1510), an attach procedure is initiated, and
when the attach procedure is successfully completed, the PDN connection for the emergency bearer service is established.

12. The UE (1520) of claim 9, wherein:
when the UE (1520) transmits a PDN connectivity request message having a request type set as an emergency to the MME (1510), a PDN connectivity procedure is initiated, and
when the PDN connectivity procedure is successfully completed, the PDN connection for the emergency bearer service is established.

13. The UE (1520) of claim 9, wherein:
when the UE (1520) transmits a PDN disconnect request message to the MME (1510) in order to request a release of the PDN connection for the emergency bearer service, a PDN disconnect procedure is initiated, and
when the PDN disconnect procedure is successfully completed, the PDN connection for the emergency bearer service is released.

14. The UE (1520) of claim 9, wherein:
when the MME (1510) transmits a deactivate EPS bearer context request message to the UE (1520) in order to deactivate a bearer associated with the PDN connection for the emergency bearer service, an EPS bearer context deactivation procedure is initiated, and
when the EPS bearer context deactivation procedure is successfully completed, the PDN connection for the emergency bearer service is released.

## Patentansprüche

1. Ein Verfahren zur Unterstützung einer erweiterten Idle-Modus Diskontinuierlichen-Empfangs, eDRX, -Aktivierung in einem drahtlosen Kommunikationssystem, wobei das Verfahren umfasst:
Übertragen, durch ein Benutzerendgerät, einer Verfolgungsbereichsaktualisierungs, TAU, -Anforderungsnachricht an eine Mobilitäts-Management-Einheit, MME, wenn eine auslösende Bedingung eines TAU-Vorgangs erfüllt ist; und
Empfangen, durch das Benutzerendgerät, einer TAU-Annahmenachricht von der MME in Antwort auf die TAU-Anforderungsnachricht,
**gekennzeichnet durch**
Wiederaufnehmen, das Benutzerendgerät, von eDRX basierend auf i) einer Paketdatennetz, PDN, -Verbindung für einen freigegebenen Notfallträgerdienst, und ii) einem von der MME während des letzten TAU-Verfahrens bereitgestellten eDRX-Parameter,
wobei basierend auf dem Benutzerendgerät mit der PDN-Verbindung für einen Notfall-Trägerdienst i) der eDRX-Parameter zwischen dem Benutzerendgerät und der MME während des TAU-Vorgangs ausgehandelt wird und ii) der eDRX von dem Benutzerendgerät nicht verwendet wird.

2. Verfahren nach Anspruch 1, wobei, wenn das Benutzerendgerät die Verwendung von eDRX anfordert, falls das Benutzerendgerät einen ersten eDRX-Parameter in die TAU-Anforderungsnachricht aufgenommen hat und die MME die eDRX-Verwendung des Benutzerendgeräts akzeptiert, ein zweiter eDRX-Parameter in die TAU-Annahmenachricht aufgenommen und der eDRX-Parameter ausgehandelt wird.

3. Das Verfahren nach Anspruch 1, wobei:
wenn das Benutzerendgerät eine Anhäng-Aufforderungsnachricht sendet, die auf einen Notfallanhang in einem entwickelten Paketsystem, EPS, hinweist, ein Anhäng-Vorgang eingeleitet wird, und
wenn der Anhäng-Vorgang erfolgreich abgeschlossen ist, die PDN-Verbindung für den Notfallträgerdienst hergestellt wird.

4. Das Verfahren nach Anspruch 1, wobei:
wenn das Benutzerendgerät eine PDN-Verbindungsfähigkeits-Anforderungsnachricht mit einem als Notfall eingestellten Anforderungstyp an die MME sendet, ein PDN-Verbindungsfähigkeitsvorgang eingeleitet wird, und
wenn der PDN-Verbindungsvorgang erfolgreich abgeschlossen ist, die PDN-Verbindung für den Notfallträgerdienst hergestellt wird.

5. Das Verfahren nach Anspruch 1, wobei:
wenn das Benutzerendgerät eine PDN-Trennanforderungsnachricht an die MME sendet, um eine Freigabe der PDN-Verbindung für den Notfallträgerdienst zu beantragen, wird ein PDN-Trennvorgang eingeleitet wird, und
wenn der PDN-Trennvorgang erfolgreich abgeschlossen ist, die PDN-Verbindung für den Notfallträgerdienst freigegeben wird.

6. Das Verfahren nach Anspruch 1, wobei:
wenn die MME eine Deaktivierungs-EPS-Träger-Kontextanforderungsnachricht an das Benutzerendgerät sendet, um einen mit der PDN-Verbindung in Zusammenhang stehenden Träger für den Notfall-Trägerdienst zu deaktivieren, ein EPS-TrägerKontextdeaktivierungsvorgang eingeleitet wird, und
wenn der EPS-Trägerkontextdeaktivierungsvorgang erfolgreich abgeschlossen ist, die PDN-Verbindung für den Notfallträgerdienst freigegeben wird.

7. Ein Verfahren zur Unterstützung einer erweiterten Idle-Modus Diskontinuierlichen-Empfangs, eDRX, -Aktivierung in einem drahtlosen Kommunikationssystem, wobei das Verfahren umfasst:
Empfangen, durch eine Mobilitäts-Management-Einheit, MME, einer Verfolgungsbereichsaktualisierungs, TAU, -anforderungsnachricht von einem Benutzerendgerät; und
Übertragen, durch die MME, einer TAU-Annahmenachricht an das Benutzerendgerät in Antwort auf die TAU-Anforderungsnachricht,
**gekennzeichnet dadurch, dass**,
basierend auf i) einer Paketdatennetz, PDN, -Verbindung für einen freigegebenen Notfallträgerdienst, und ii) einem von der MME während des letzten TAU-Verfahrens an das Benutzerendgerät bereitgestellten eDRX-Parameter, die eDRX-Verwendung des Benutzerendgeräts wiederaufgenommen wird, und
wobei basierend auf dem Benutzerendgerät mit der PDN-Verbindung für einen Notfall-Trägerdienst i) der eDRX-Parameter zwischen dem Benutzerendgerät und der MME während des TAU-Vorgangs ausgehandelt wird und ii) der eDRX von dem Benutzerendgerät nicht verwendet wird.

8. Verfahren nach Anspruch 7, wobei, wenn das Benutzerendgerät die Verwendung von eDRX anfordert, falls das Benutzerendgerät einen ersten eDRX-Parameter in die TAU-Anforderungsnachricht aufgenommen hat und die MME die eDRX-Verwendung des Benutzerendgeräts akzeptiert, ein zweiter eDRX-Parameter in die TAU-Annahmenachricht aufgenommen und der eDRX-Parameter ausgehandelt wird.

9. Ein Benutzerendgerät, UE (1520), zur Unterstützung einer erweiterten Idle-Modus Diskontinuierlichen-Empfangs, eDRX, -Aktivierung in einem drahtlosen Kommunikationssystem, wobei das UE (1520) umfasst:
einen Transceiver (1523);
mindestens einen Prozessor (1521); und
mindestens einen Computerspeicher (1522), der betriebsfähig mit dem mindestens einen Prozessor (1521) verbindbar ist und Befehle speichert, die, wenn sie von dem mindestens einen Prozessor (1521) ausgeführt werden, Operationen ausführen, die umfassen:
Übertragen, über den Transceiver (1523), einer Verfolgungsbereichsaktualisierungs, TAU, -Anforderungsnachricht an eine Mobilitäts-Management-Einheit, MME (1510), wenn eine auslösende Bedingung eines TAU-Vorgangs erfüllt ist; und
Empfangen, über den Transceiver (1523), einer TAU-Annahmenachricht von der MME in Antwort auf die TAU-Anforderungsnachricht,
**gekennzeichnet dadurch, dass**
, wenn ausgeführt durch den mindestens einen Prozessor (1521), Operation durchgeführt werden umfassend:
Wiederaufnehmen, von eDRX, basierend auf i) einer Paketdatennetz, PDN, - Verbindung für einen freigegebenen Notfallträgerdienst, und ii) einem von der MME (1510) während des letzten TAU-Verfahrens bereitgestellten eDRX-Parameter,
wobei basierend auf dem UE (1520) mit der PDN-Verbindung für einen Notfall-Trägerdienst i) der eDRX-Parameter zwischen dem UE und der MME während des TAU-Vorgangs ausgehandelt wird und ii) der eDRX von dem UE (1520) nicht verwendet wird.

10. Das UE (1520) nach Anspruch 9, wobei, wenn das UE (1520) die Verwendung von eDRX anfordert, falls das UE (1520) einen ersten eDRX-Parameter in die TAU-Anforderungsnachricht aufgenommen hat und die MME (1510) die eDRX-Verwendung des UEs (1520) akzeptiert, ein zweiter eDRX-Parameter in die TAU-Annahmenachricht aufgenommen wird und der eDRX-Parameter ausgehandelt wird.

11. Das UE (1520) nach Anspruch 9, wobei:
wenn das UE (1520) eine Verbindungsanforderungsnachricht, die einen Notfall-Anhang in einem entwickelten Paketsystem, EPS, anzeigt, ein Anhängtypinformationselement an die MME (1510) sendet, ein Anhängvorgang eingeleitet wird, und
Wenn der Anhängevorgang erfolgreich abgeschlossen ist, die PDN-Verbindung für den Notfallträgerdienst hergestellt wird.

12. Das UE (1520) nach Anspruch 9, wobei:
wenn das UE (1520) eine PDN-Verbindungsfähigkeitsanforderungsnachricht mit einem als Notfall eingestellten Anforderungstyp an die MME (1510) sendet, ein PDN-Verbindungsfähigkeitsvorgang eingeleitet wird, und
wenn der PDN-Verbindungsvorgang erfolgreich abgeschlossen ist, die PDN-Verbindung für den Notfallträgerdienst hergestellt wird.

13. Das UE (1520) nach Anspruch 9, wobei:
wenn das UE (1520) eine PDN-Trennanforderungsnachricht an die MME (1510) sendet, um eine Freigabe der PDN-Verbindung für den Notfallträgerdienst zu beantragen, ein PDN-Trennvorgang eingeleitet wird, und
wenn der PDN-Trennvorgang erfolgreich abgeschlossen ist, die PDN-Verbindung für den Notfallträgerdienst freigegeben wird.

14. Das UE (1520) nach Anspruch 9, wobei:
wenn die MME (1510) eine Deaktivierungs-EPS-Trägerkontext-Anforderungsnachricht an das UE (1520) sendet, um einen mit der PDN-Verbindung in Zusammenhang stehenden Träger für den Notfallträgerdienst zu deaktivieren, ein EPS-Trägerkontext-Deaktivierungsvorgang eingeleitet wird, und
wenn der EPS-Trägerkontext-Deaktivierungsvorgang erfolgreich abgeschlossen ist, die PDN-Verbindung für den Notfall-Trägerdienst freigegeben wird.

## Revendications

1. Procédé de prise en charge de l'activation de réception discontinue étendue, eDRX, en mode veille dans un système de communication sans fil, le procédé consistant à : transmettre par un équipement utilisateur, un message de requête de mise à jour de zone de suivi, TAU, à une entité de gestion de mobilité, MME, lorsqu'une condition de déclenchement d'une procédure TAU est remplie ; et recevoir, par l'équipement utilisateur, un message d'acceptation TAU en provenance de la MME en réponse au message de requête TAU, **caractérisé par** la reprise, par l'équipement utilisateur, de l'eDRX, en fonction de i) une connexion de réseau de données en mode paquet, PDN, pour un service support d'urgence étant libérée et ii) un paramètre eDRX ayant été fourni par la MME pendant la dernière procédure TAU, en fonction de l'équipement utilisateur qui a une connexion PDN pour un service de support d'urgence, i) le paramètre eDRX est négociée entre l'équipement utilisateur et la MME pendant la procédure TAU et ii) l'eDRX n'est pas utilisée par l'équipement utilisateur.

2. Procédé selon la revendication 1, lorsque l'équipement utilisateur demande à utiliser l'eDRX, si l'équipement utilisateur a inclus un premier paramètre eDRX dans le message de requête TAU et que la MME accepte que l'équipement utilisateur utiliser l'eDRX, un second paramètre eDRX est inclus dans le message d'acceptation TAU et le paramètre eDRX est négocié.

3. Procédé selon la revendication 1 : lorsque l'équipement utilisateur transmet un message de requête d'annexe indiquant une annexe d'urgence dans un système paquet évolué, EPS, un élément d'information de type annexe à la MME, une procédure d'annexion étant lancée et lorsque la procédure d'annexion est réussie, la connexion PDN pour le service support d'urgence est établie.

4. Procédé selon la revendication 1, lorsque l'équipement utilisateur transmet un message de requête de connectivité PDN ayant un type de requête considéré comme une urgence, à la MME, une procédure de connectivité PDN est lancée, et lorsque la procédure de connectivité PDN est réussie, la connexion PDN pour le service support d'urgence est établie.

5. Procédé selon la revendication 1 :
lorsque l'équipement utilisateur transmet un message de requête de déconnexion PDN à la MME afin de demander de libérer la connexion PDN pour le service support d'urgence, une procédure de déconnexion PDN est lancée, et
lorsque la procédure de déconnexion PDN est réussie, la connexion PDN pour le service porteuse d'urgence est libérée.

6. Procédé selon la revendication 1 :
lorsque la MME transmet une message de requête de contexte de support EPS désactivé à l'équipement utilisateur pour désactiver un support associé à la connexion PDN pour le service support d'urgence, une procédure de désactivation de contexte de support EPS est lancée, et
la procédure de désactivation de contexte de support EPS est réussie, la connexion PDN pour le service porteuse d'urgence est libérée.

7. Procédé de prise en charge de l'activation de réception discontinue étendue, eDRX, en mode veille dans un système de communication sans fil, le procédé consistant à : recevoir, par une unité de gestion de mobilité, MME, un message de requête de mise à jour de zone de suivi, TAU, en provenance de l'équipement utilisateur ; et à transmettre, par la MME, un message d'acceptation à l'équipement utilisateur en réponse au message de requête TAU, **caractérisé en ce qu'**en fonction de i) une connexion de réseau de données en mode paquet, PDN, pour un service support d'urgence étant libérée et ii) un paramètre eDRX ayant été fourni par la MME à l'équipement utilisateur pendant la dernière procédure TAU, l'utilisation d'eDRX de l'équipement utilisateur est reprise, et en fonction de l'équipement utilisateur qui a une connexion PDN pour un service de support d'urgence, i) le paramètre eDRX est négocié entre l'équipement utilisateur et la MME pendant la procédure TAU et ii) l'eDRX n'est pas utilisée par l'équipement utilisateur.

8. Procédé selon la revendication 7, lorsque l'équipement utilisateur demande à utiliser l'eDRX, si l'équipement utilisateur a inclus un premier paramètre eDRX dans le message de requête TAU et que la MME accepte que l'équipement utilisateur utiliser l'eDRX, un second paramètre eDRX est inclus dans le message d'acceptation TAU et le paramètre eDRX est négocié.

9. Équipement utilisateur, UE, (1520), de prise en charge de l'activation de réception discontinue étendue, eDRX, en mode veille dans un système de communication sans fil, l'UE (1520) comprenant : un émetteur-récepteur (1523) ; au moins un processeur (1521) ; et au moins une mémoire d'ordinateur (1522) servant à se connecter audit processeur (1521) et à mémoriser les instructions qui, lorsqu'elles sont exécutées par ledit processeur (1521), effectuent les opérations consistant à : transmettre, par l'intermédiaire de l'émetteur-récepteur (1523), un message de requête de mise à jour de zone de suivi, TAU, à une entité de gestion de mobilité, MME (1510),
lorsqu'une condition de déclenchement d'une procédure TAU est remplie ; et recevoir, par l'équipement utilisateur, un message d'acceptation TAU en provenance de la MME en réponse au message de requête TAU, **caractérisé par** la reprise, par l'intermédiaire de l'émetteur-récepteur (1523), un message d'acceptation TAU en provenance de la MME (1510) en réponse au message de requête TAU, **caractérisé en ce que** lorsqu'il est exécuté par ledit processeur (1521), effectue les opération consistant à : reprendre une eDRX en fonction i) d'une connexion de réseau de données en mode paquet, PDN, pour un service support d'urgence étant libérée et ii) un paramètre eDRX ayant été fourni par la MME pendant la dernière procédure TAU, en fonction de l'équipement utilisateur (1520) qui a une connexion PDN pour un service de support d'urgence, i) le paramètre eDRX est négocié entre l'équipement utilisateur (1520) et la MME (1510) pendant la procédure TAU et ii) l'eDRX n'est pas utilisée par l'équipement utilisateur (1520).

10. UE (1520) UE (1520) selon la revendication 9, lorsque l'UE (1520) demande à utiliser l'EDRX, si l'UE (1520) a inclus un premier paramètre eDRX dans le message de requête TAU et que la MME (1510) accepte que l'UE (1520) utilise l'eDRX, un second paramètre eDRX est inclus dans le message d'acceptation TAU et le paramètre eDRX est négocié.

11. UE (1520) selon la revendication 9:
lorsque l'UE (1520) transmet un message de requête d'annexe indiquant une annexe d'urgence dans un système paquet évolué, EPS, un élément d'information de type annexe à la MME, une procédure d'annexion étant lancée et lorsque la procédure d'annexion est réussie, la connexion PDN pour le service support d'urgence est établie.

12. UE (1520) selon la revendication 9:
l'UE (1520) transmettant un message de requête de connectivité PDN ayant un type de requête considéré comme une urgence à la MME (1510), une procédure de connectivité PDN est lancée, et
lorsque la procédure de connectivité PDN est réussie, la connexion PDN pour le service support d'urgence est établie.

13. UE (1520) selon la revendication 9:
lorsque l'UE (1520) transmet un message de requête de déconnexion PDN à la MME (1510) afin de demander à libérer la connexion PDN pour le serveur support d'urgence, une procédure de déconnexion PDN est lancée, et
lorsque la procédure de connectivité PDN est réussie, la connexion PDN pour le service support d'urgence est libérée.

14. UE (1520) UE (1520) selon la revendication 9:
lorsque la MME (1510) transmet un message de requête de contexte de support EPS désactivé à l'UE (1520) afin de désactiver un support associé à la connexion PDN pur le service support d'urgence, une procédure de désactivation de contexte de support EPS est lancée, et
Lorsque la procédure de désactivation de contexte de support EPS est réussie, la connexion PDN pour le service de support d'urgence est libérée.
